# EUROPÄISCHE PATENTANMELDUNG

(11) **EP 4 703 607 A1**
(43) Veröffentlichungstag der Anmeldung: **04.03.2026**
(21) Anmeldenummer: 25196432.6
(22) Anmeldetag: 18.08.2025
(51) Int. Cl.: F16H 61/4078, B60K 6/20, E01C 19/28, F16H 61/444

(54) **BAUMASCHINE, INSBESONDERE EINE TANDEMWALZE, SOWIE EIN VERFAHREN ZUM UMRÜSTEN EINER BAUMASCHINE**

(30) Priorität: 28.08.2024 DE 102024124568
(71) Anmelder: BOMAG GmbH, 56154 Boppard (DE)
(72) Erfinder: MEBUS, Lukas, 56154 Boppard (DE); LAUGWITZ, Niels, 56154 Boppard (DE)
(74) Vertreter: Zimmermann & Partner Patentanwälte mbB

(57) **Zusammenfassung**

Die Erfindung betrifft eine Baumaschine, insbesondere eine Tandemwalze, mit einer Hauptmaschine und an einem mit der Hauptmaschine verbindbaren Anbauantriebsmodul. Die Erfindung betrifft ferner ein Verfahren zum Umrüsten einer Baumaschine mit einem Primärantriebsaggregat mithilfe eines Anbauantriebsmoduls zu einer Baumaschine mit einem Primärantriebsaggregat und einem Sekundärantriebsaggregat.

## Beschreibung

Die Erfindung betrifft eine Baumaschine, insbesondere eine Tandemwalze, sowie ein Verfahren zum Umrüsten einer Baumaschine.

Baumaschinen, insbesondere Tandemwalzen, sind im Stand der Technik vielfach beschrieben, beispielsweise in der EP4074894A1. Baumaschinen können beispielsweise einen Verbrennungsmotor umfassen, der eine oder mehrere Pumpen eines Hydrauliksystems antreibt, beispielsweise zum Erhalt eines Fahrantriebes und/oder eines Antriebes von einem oder mehreren Arbeitsaggregaten, wie beispielsweise in der DE 10 2017 011 476 A1 offenbart. Aufgrund stetig steigender Anforderungen an Emissionsbegrenzungen beim Betrieb insbesondere auch solcher Baumaschinen ist es auch bereits bekannt, derartige Baumaschine zu elektrifizieren, wie beispielsweise in der DE 10 2019 002 439 A1 beschrieben. Dies können insbesondere auch vollelektrifizierte und damit ausschließlich elektromotorisch betriebene Baumaschinen sein, die zum Teil gar keinen Verbrennungsmotor mehr aufweisen. Auch elektrohydraulische Antriebskonzepte sind im Stand der Technik beschrieben. Baumaschinen ohne Verbrennungsmotor bringen den Vorteil mit sich, dass sie praktisch emissionsfrei eingesetzt werden können. Nachteilig ist, dass der Benutzer in diesen Fällen auch ausschließlich auf in der Regel eine elektrische Energieversorgung als Primärantriebsenergiequelle, beispielsweise durch einen Akku, angewiesen ist.

Um einen wahlweisen Betrieb einer Baumaschine sowohl in einem verbrennungsmotorischen als auch einem elektromotorischen Antriebsmodus zu ermöglichen, sind im Stand der Technik auch bereits sogenannte Hybridmaschinen bekannt. Diese umfassen üblicherweise gleichzeitig einen Verbrennungsmotor und einen Elektromotor, die beide, einzeln oder in Kombination, als Primärantriebsquelle nutzbar sind, wie beispielsweise in der EP2353956B1 offenbart. Der Nachteil dieser Maschinen besteht darin, dass sie allein schon aufgrund der doppelt vorhandenen Primärantriebsquelle vergleichsweise kostenintensiv sind.

Für Benutzer bestehen daher aktuell nur die Möglichkeiten, auf eine Baumaschine mit exklusiv einem Verbrennungsmotor als Primärantrieb zurückzugreifen, was zunehmend mit gesetzlichen Anforderungen und/oder Auflagen aus Bauprojektausschreibungen kollidiert, auf eine Baumaschine mit exklusiv einem Elektromotor zurückzugreifen, was in der Regel die Neuanschaffung einer Baumaschine bedeutet und mit den Nachteilen vollelektrifizierter Antriebssysteme, wie beispielsweise der vergleichsweise begrenzten Reichweite, einhergeht, oder, ebenfalls üblicherweise als Neuanschaffung, auf eine Hybridmaschine zurückzugreifen, die vergleichsweise kostenintensiv in der Anschaffung und komplex in der Wartung sein kann.

Hiervon ausgehend besteht die Aufgabe der Erfindung darin, eine Möglichkeit anzugeben, die es einem Bediener einer Baumaschine ermöglicht, die Baumaschine wahlweise sowohl durch einen Verbrennungsmotor als Primärantriebsquelle als auch durch einen Elektromotor als Primärantriebsquelle betreiben zu können, und die gleichzeitig vergleichsweise kostengünstig ist. Besonders wünschenswert ist es zudem, wenn auch konventionelle, aktuell üblicherweise rein verbrennungsmotorisch betriebene, Baumaschinen zumindest übergangsweise unter Umgehung des Verbrennungsmotors aus einer elektromotorischen Primärantriebsquelle betrieben werden könnten.

Die Lösung der Aufgabe gelingt mit einer Baumaschine sowie einem Verfahren gemäß den unabhängigen Ansprüchen. Bevorzugte Weiterbildungen sind in den abhängigen Ansprüchen angegeben.

Ein erster Aspekt der Erfindung betrifft eine Baumaschine, insbesondere eine Straßenbaumaschine und/oder Bodenverdichtungsmaschine, ganz besonders eine Tandemwalze. Bei den vorliegend relevanten Baumaschinen kann es sich insbesondere um selbstfahrende Baumaschinen handeln. Derartige Baumaschinen umfassen somit einen eigenen Fahrantrieb und erzeugen die für den Fahr- und Arbeitsbetrieb erforderliche Antriebsenergie selbst. Straßenbaumaschinen sind Baumaschinen, die im Straßen- und Wegebau verwendet werden, beispielsweise im Rahmen der Neuerstellung und/oder Sanierung von Straßen, Wegen und Pisten. Typische Straßenbaumaschinen können beispielsweise Straßenfräsen, Straßenfertiger und Bodenverdichtungsmaschinen, wie beispielsweise Walzen, sein. Bodenverdichtungsmaschinen können, beispielsweise im Rahmen allgemeiner Untergrund-, insbesondere Erdverdichtungsarbeiten eingesetzte, sogenannte Walzenzüge, oder, insbesondere zur Verdichtung einer Asphaltmatte eingesetzte, Tandemwalzen und/oder Gummiradwalzen sein. Die Straßen- und/oder Bodenverdichtungsmaschinen können eine oder mehrere Fahreinrichtungen aufweisen. Diese können in Form von Rädern und/oder Kettenlaufwerken, im Fall von Bodenverdichtungsmaschinen aber insbesondere auch in Form einer oder mehrerer, insbesondere im Wesentlichen trommelförmiger und hohlzylindrischer, Walzbandagen ausgebildet sein. Derartige Baumaschinen können insbesondere ein oder mehrere Arbeitsaggregate umfassen, beispielweise Schwingungserreger, eine Fräswalze, eine Einbaubohle etc. Diese Baumaschinen können somit neben dem Fahrantrieb ein oder mehrere weitere Antriebsmotoren umfassen, die beispielsweise das oder die Arbeitsaggregate antreiben.

Erfindungsgemäß umfasst die Baumaschine eine Hauptmaschine und ein Anbauantriebsmodul.

Die Hauptmaschine kann eine für sich vollfunktionsfähige Gesamtheit bezeichnen und für sich auch ohne das Anbauantriebsmodul fahren und die für sie vorgesehene Arbeitsfunktion, wie beispielsweise Verdichten oder Fräsen, durchführen. Bei der Hauptmaschine handelt es sich somit insbesondere auch für sich bereits um eine vollfunktionsfähige Baumaschine, allerdings ohne die Möglichkeit, dass diese Baumaschine durch ein Sekundärantriebsaggregat des Anbauantriebsmoduls angetrieben wird, wie nachstehend noch näher erläutert. Das Sekundärantriebsaggregat ist gegenüber dem Primärantriebsaggregat nicht hierarchisch untergeordnet zu verstehen, sondern als optional vorhandenes, vollwertiges und gegenüber dem Primärantriebsaggregat wahlweise zum Antrieb der Hauptmaschine nutzbares Antriebsaggregat. Die Bezeichnung Sekundärantriebsaggregat bringt vorliegend somit zum Ausdruck, dass das Sekundärantriebsaggregat der Hauptmaschine mit dem, in der Regel fest eingebauten und damit nicht zum regelmäßig wiederholten Ausbau vorgesehenen, Primärantriebsaggregat erst später durch Aufnahme eines nachstehend noch näher beschriebenen Anbauantriebsmoduls mit dem Sekundärantriebsaggregat hinzugefügt worden ist. Es kann vorgesehen sein, dass die Hauptmaschine einen Maschinenrahmen umfasst. Dieser bezeichnet die wesentliche Tragstruktur der Baumaschine. Der Maschinenrahmen kann einstückig ausgebildet sein. Es ist für knickgelenkte Baumaschinen allerdings auch möglich, den Maschinenrahmen zweiteilig mit einem Vorderrahmen und einem Hinterrahmen auszubilden. Der Vorderrahmen und der Hinterrahmen können in diesem Fall über eine Knickgelenkeinrichtung miteinander verbunden sein.

Die Hauptmaschine kann eine oder mehrere Fahreinrichtungen umfassen. Hierbei kann es sich um eine oder mehrere Walzbandagen, Räder und/oder Kettenlaufwerke handeln. Es kann vorgesehen sein, dass eine oder mehrere der Fahreinrichtungen jeweils einen Hydraulikmotor aufweisen, der eine Drehbewegung der jeweiligen Fahreinrichtung antreibt.

Die Hauptmaschine kann ferner, insbesondere genau, ein Primärantriebsaggregat umfassen. Das Primärantriebsaggregat kann ein Verbrennungsmotor, insbesondere ein Dieselverbrennungsmotor, sein. Das Primärantriebsaggregat kann insbesondere derart ausgebildet sein, dass es die für den Fahr- und Arbeitsbetrieb der Baumaschine erforderlicher Antriebsenergie zur Verfügung stellt. Insbesondere kann es vorgesehen sein, dass das Primärantriebsaggregat eine einen Abtrieb des Primärantriebsaggregates bildende Abtriebswelle antreibt, die zu Antriebszwecken eines oder mehrerer nachgelagerter Aggregate nutzbar ist. Dies kann beispielsweise eine Zapfwelle sein. Die Abtriebswelle kann eine Kurbelwelle umfassen.

Die Hauptmaschine kann ein Hydrauliksystem umfassen. Das Hydrauliksystem bezeichnet vorliegend insbesondere die Gesamtheit derjenigen Komponenten, die von der Hauptmaschine mitgeführtes Hydraulikfluid speichern, bewegen und/oder leiten. Das Hydrauliksystem der Hauptmaschine kann dazu einen oder mehrere Hydraulikfluidtanks, Hydraulikfluidleitungen, Hydraulikpumpen und Hydraulikmotoren aufweisen. Auch weitere Komponenten, wie beispielsweise Hydraulikfluidkühler und/oder -filter und/oder ein oder mehrere Ventile, können hiervon umfasst sein.

Konkret kann es vorgesehen sein, dass das Hydrauliksystem der Hauptmaschine einen ersten Hydraulikkreislauf mit einer ersten Hydraulikpumpe und einem ersten Hydraulikmotor sowie einen zweiten Hydraulikkreislauf mit einer zweiten Hydraulikpumpe und mit einem zweiten Hydraulikmotor aufweist. Der erste und/oder der zweite Hydraulikfluidkreislauf können als offener und/oder geschlossener Hydraulikfluidkreislauf ausgebildet sein. Innerhalb des jeweiligen Hydraulikfluidkreislaufes kann Hydraulikfluid, gefördert durch die jeweilige Hydraulikpumpe, den jeweiligen Hydraulikmotor antreiben. Innerhalb des jeweiligen Hydraulikkreislaufes gefördertes Hydraulikfluid hatte keine Auswirkung auf den jeweils anderen Hydraulikkreislauf. Der erste und der zweite Hydraulikkreislauf können somit hinsichtlich des jeweils angetriebenen Hydraulikmotors und der von diesem angetriebenen Funktionskomponenten der Baumaschine funktional voneinander getrennt sein bzw. individuell und unabhängig voneinander der jeweiligen Hydraulikpumpe und dem jeweiligen Hydraulikmotor zugeordnet sein.

Es kann jedoch vorgesehen sein, dass die erste Hydraulikpumpe und die zweite Hydraulikpumpe miteinander über einer Kopplungseinrichtung antriebsverbunden sind und zusammen über einen Primärantriebsstrang vom Primärantriebsaggregat antreibbar sind. Die Kopplungseinrichtung kann insbesondere derart ausgebildet sein, dass die erste und die zweite Hydraulikpumpe direkt und insbesondere ausschließlich mechanisch miteinander antriebsverbunden sind und/oder gemeinsam mit einem Abtrieb, insbesondere der Abtriebswelle, ganz besonders der Zapfwelle, des Primärantriebsaggregats in einer Antriebsverbindung stehen.

Es kann auch vorgesehen sein, dass zwischen dem Primärantriebsaggregat, der ersten Hydraulikpumpe und/oder der zweiten Hydraulikpumpe eine oder mehrere Verteilerstufen, wie beispielsweise ein Pumpenverteilergetriebe, vorhanden sind. Die erste und zweite Hydraulikpumpe können auch in einer Tandemanordnung bzw. als Tandempumpe ausgebildet sein.

Die erfindungsgemäße Baumaschine kann neben der für sich bereits voll funktionsfähigen Hauptmaschine mit dem Primärantriebsaggregat ein Anbauantriebsmodul aufweisen bzw. ein solches kann mit der Hauptmaschine verbunden und von dieser anschließend mitgeführt werden. Das Anbauantriebsmodul kann ein Hybridisierungsaggregat darstellen, durch das extern zur Hauptmaschine eine Antriebsquelle in Form des Sekundärantriebsaggregates zur Verfügung steht, die optional von der Hauptmaschine mitgeführt werden kann und einen zum Primärantriebsaggrat alternativen Antrieb der Hauptmaschine ermöglicht. Bei dem Anbauantriebsmodul handelt es sich somit um eine von der Hauptmaschine separat handhabbare Einheit, die wahlweise mit der Hauptmaschine verbindbar und auch wieder von dieser trennbar ist. Es handelt sich somit um eine Anbau- bzw. Wechseleinheit. Es ist bevorzugt, wenn sich das Anbauantriebsmodul in dem mit der Hauptmaschine verbundenen Zustand außerhalb der Außenoberfläche der Hauptmaschine befindet. Das Anbauantriebsmodul kann ein Sekundärantriebsaggregat und eine von dem Sekundärantriebsaggregat angetriebene Anbaumodulhydraulikpumpe aufweisen. Das Sekundärantriebsaggregat stellt, wie letztendlich auch das Primärantriebsaggregat, eine Einrichtung dar, über die ergänzend oder alternativ zum Primärantriebsaggregat für den wenigstens teilweisen Betrieb der Baumaschine erforderliche Antriebsenergie zur Verfügung stellbar ist, wie nachstehend noch näher erläutert. Es ist bevorzugt, wenn es sich bei dem Sekundärantriebsaggregat nicht um einen Verbrennungsmotor handelt, sondern um ein davon abweichendes, insbesondere gegenüber einem Verbrennungsmotor emissionsärmeres, Antriebsaggregat.

Es kann nun vorgesehen sein, dass zwischen der Hauptmaschine und dem Anbauantriebmodul eine trennbare hydraulische Verbindungsschnittstelle vorhanden ist. Die trennbare hydraulische Verbindungsschnittstelle bezeichnet somit insbesondere eine Schnittstelle zwischen der Hauptmaschine und dem Anbauantriebsmodul, über die Hydraulikfluid von dem Anbauantriebsmodul kommend zur Hauptmaschine und, insbesondere gleichzeitig, umgekehrt und zum Erhalt einen Hydraulikkreislaufes leitbar ist. Die hydraulische Verbindungsschnittstelle kann somit wenigstens zwei oder mehr Leitungsdurchgänge für Hydraulikfluid umfassen. Die im Umfang der vorliegend als Baumaschine bezeichnete Gesamtheit aus Hauptmaschine und Anbauantriebsmodul kann zudem insbesondere derart ausgebildet sein, dass das Anbauantriebsmodul von der Hauptmaschine entfernbar ist. Hierzu kann die hydraulische Verbindungsschnittstelle entsprechend trennbar ausgebildet sein, beispielsweise über eine oder mehrere Schlauchverbindungen mit einer oder mehreren Schlauchverbindungskupplungen oder ähnlichem, insbesondere einer oder mehreren selbstverschließenden Schlauchverbindungskupplungen oder ähnlichem, d.h. Schlauchverbindungskupplungen, die sich beim Entfernen eines oder mehrerer eingekuppelter Schlauchkupplungsstücke selbsttätig verschließen. Trennbar bedeutet somit insbesondere, dass eine Leitungsverbindung vorhanden ist, die zerstörungsfrei trennbar und auch wieder verbindbar ist. Die trennbare hydraulische Verbindungsschnittstelle kann somit insbesondere einen Übertrittsbereich bezeichnen, in dem Hydraulikfluid von der Hauptmaschine in das Anbauantriebsmodul übergeht und umgekehrt.

Idealerweise wird mithilfe der hydraulischen Verbindungsschnittstelle ein Hybridhydraulikkreislauf in der Baumaschine erhalten. Dies kann beispielsweise dadurch erfolgen, dass das Anbauantriebsmodul zum Erhalt eines sich wenigstens teilweise durch die Anbaumodulhydraulikpumpe und den ersten Hydraulikfluidkreislauf erstreckenden und die erste Hydraulikpumpe und/oder den ersten Hydraulikmotor antreibenden Hybridhydraulikkreislaufes über eine die trennbare hydraulische Verbindungsschnittstelle durchlaufende erste Leitungsverbindung und über eine die trennbare hydraulische Verbindungsschnittstelle durchlaufende zweite Leitungsverbindung mit dem ersten Hydraulikkreislauf verbunden ist. Der Hybridhydraulikkreislauf kann einen Hydraulikkreislauf bezeichnen, der sich wenigstens teilweise durch die Anbaumodulhydraulikpumpe des Anbauantriebsmoduls und den ersten Hydraulikfluidkreislauf der Hauptmaschine erstreckt. Der Hybridhydraulikkreislauf verläuft bzw. erstreckt sich somit teilweise auf Seiten der Hauptmaschine und gleichzeitig teilweise auf Seiten des Anbauantriebsmoduls. Wird Hydraulikfluid im Hybridhydraulikkreislauf bewegt, erfolgt somit stets ein Austausch von Hydraulikfluid zwischen dem Anbauantriebsmodul und der Hauptmaschine. Es kann vorgesehen sein, dass sich der Hybridhydraulikkreislauf wenigstens teilweise durch die Anbaumodulhydraulikpumpe, d.h. auf Seiten des Anbauantriebsmoduls, und den ersten Hydraulikfluidkreislauf, d.h. auf Seiten der Hauptmaschine, erstreckt. Es kann weiter vorgesehen sein, dass sich der Hybridhydraulikkreislauf in der Weise durch den ersten Hydraulikfluidkreislauf erstreckt, dass in ihm von der Anbaumodulhydraulikpumpe gefördertes Hydraulikfluid die erste Hydraulikpumpe und/oder den ersten Hydraulikmotor des ersten Hydraulikkreislaufes antreibt. Damit können der erste Hydraulikmotor und/oder die erste Hydraulikpumpe nicht nur von dem Primärantriebsaggregat der Hauptmaschine, sondern, insbesondere alternativ, auch von dem Sekundärantriebsaggregat des Anbauantriebsmoduls angetrieben werden. Es kann dabei insbesondere vorgesehen sein, dass im Hybridhydraulikkreislauf von der Anbaumodulhydraulikpumpe geleitetes bzw. gefördertes Hydraulikfluid ausschließlich einen oder mehrere Hydraulikpumpen und/oder einen oder mehrere Hydraulikmotoren des ersten Hydraulikkreislaufes antreiben kann und gleichzeitig keine Hydraulikpumpe, keinen Hydraulikmotor und/oder keinen sonstigen Verbraucher hydraulischer Antriebsenergie des zweiten Hydraulikkreislaufes antreiben kann. Der Hybridhydraulikkreislauf kann somit insbesondere hydraulisch getrennt vom zweiten Hydraulikkreislauf ausgebildet sein. Wie auch für den ersten Hydraulikkreislauf der Hauptmaschine kann es für den Hybridhydraulikkreislauf des Anbauantriebsmoduls und der Hauptmaschine vorgesehen sein, dass dieser hinsichtlich übertragener hydraulischer Energie, insbesondere vollständig, hydraulisch getrennt und separat zum zweiten Hydraulikkreislauf der Baumaschine verläuft. Zum konkreten Austausch von Hydraulikfluid bzw. hydraulischer Antriebsenergie zwischen dem Anbauantriebsmodul und der Hauptmaschine ist es möglich, dass das Anbauantriebsmodul bzw. dessen Anbaumodulhydraulikpumpe über eine die trennbare hydraulische Verbindungsschnittstelle durchlaufende erste Leitungsverbindung und über eine die trennbare hydraulische Verbindungsschnittstelle durchlaufende zweite Leitungsverbindung mit dem ersten Hydraulikkreislauf verbunden ist. Die erste und die zweite Leitungsverbindung können somit spezielle Leitungsabschnitte darstellen, die speziell für den Austausch von Hydraulikfluid zwischen dem Anbauantriebsmodul und der Hauptmaschine vorgesehen sind und beispielsweise dann nicht benötigt und insbesondere auch nicht von Hydraulikfluid durchströmt werden müssen, wenn die erste Hydraulikpumpe anstelle vom Sekundärantriebsaggregat des Anbauantriebsmoduls vom Primärantriebsaggregat der Hauptmaschine, insbesondere auch der Hauptmaschine ohne vorhandenes Anbauantriebsmodul, angetrieben wird.

Dadurch, dass es sich baulich bei dem Anbauantriebsmodul somit um ein gegenüber der Hauptmaschine separates und externes Aggregat handelt, ist es möglich, dieses beispielsweise dann, wenn ein emissionsärmerer Betrieb einer konventionell mittels eines Verbrennungsmotors als Primärantriebsaggregat angetriebenen Hauptmaschine gewünscht ist, wahlweise mit dem Anbauantriebsmodul zum Erhalt der Baumaschine zu ergänzen und über den dadurch erhaltenen Hybridhydraulikkreislauf einen Antrieb eines oder mehrerer Hydraulikmotoren und/oder Hydraulikpumpen des ersten Hydraulikkreislaufes zu ermöglichen. Dazu muss neben der Aufnahme des Anbauantriebsmoduls durch die Hauptmaschine lediglich eine hydraulische Übertragungsverbindung über die hydraulische Verbindungsschnittstelle durchgeführt werden. Gleichermaßen ist durch eine Umkehrung dieser Maßnahmen auch ein vergleichsweise einfaches Abrüsten der Baumaschine hin zu den zueinander separaten Einheiten "Hauptmaschine" und "Anbauantriebsmodul" möglich. Das Anbauantriebsmodul steht dann beispielsweise zum Einsatz an einer anderen Hauptmaschine zur Verfügung und die ursprüngliche Hauptmaschine kann mithilfe des Primärantriebsaggregates weiter betrieben werden. Das vorstehend beschriebene Anbauantriebsmodul eignet sich daher auch insbesondere zur Nachrüstung konventioneller Hauptmaschinen mit einem praktisch fest installierten Verbrennungsmotor als Primärantriebsaggregat, da die für eine Hybridisierung wesentlichen Komponenten, konkret das Sekundärantriebsaggregat und die von dem Sekundärantriebsaggregat angetriebene Anbaumodulhydraulikpumpe, extern über das Anbauantriebsmodul zur Verfügung gestellt werden können. Darüber hinaus ist es auch möglich, das eine Anbauantriebsmodul sukzessive an verschiedene Hauptmaschinen anzubauen und auf diese Weise mithilfe nur eines Anbauantriebsmoduls nacheinander mehrere Hauptmaschinen mit auf einer Baustelle aufeinander folgenden Funktionen über das eine, insbesondere gegenüber dem Primärantriebsaggregat emissionsärmere, Anbauantriebsmodul anzutreiben. Damit genügt somit ein einziges Anbauantriebsmodul für einen vergleichsweise emissionsärmeren Betrieb verschiedener Baumaschinen und die Anschaffung einer vollständigen "Hybridflotte" ist nicht erforderlich.

Ferner ist es aufgrund des Umstandes, dass die erste Hydraulikpumpe und die zweite Hydraulikpumpe miteinander über die Kopplungseinrichtung antriebsverbunden sein können, möglich, indirekt über einen Antrieb der ersten Hydraulikpumpe durch den Hybridhydraulikkreislauf durch das Sekundärantriebsaggregat auch die zweite Hydraulikpumpe des zweiten Hydraulikkreislaufes anzutreiben und entsprechend auch die von dem oder den Hydraulikmotoren des zweiten Hydraulikkreislaufes angetriebenen Verbraucher anzutreiben. Dabei erfolgt eine zweistufige Energiewandlung. Die im Hybridhydraulikkreislauf geförderte hydraulische Energie wird zunächst von der, wie nachstehend noch näher beschrieben idealerweise als Motor-Pumpe-Einheit ausgebildeten, ersten Hydraulikpumpe in mechanische Energie umgesetzt und beispielsweise über eine ein Antriebsdrehmoment übertragende Welle an die zweite Hydraulikpumpe zum Antrieb derselben übertragen. Die erste Hydraulikpumpe wirkt in diesem Fall somit als Hydraulikmotor. Die zweite, in diesem Fall mechanisch von der ersten Hydraulikpumpe angetriebene, Hydraulikpumpe fördert dadurch Hydraulikfluid im zweiten Hydraulikkreislauf, so dass an der zweiten Hydraulikpumpe eingehende mechanische Energie wieder in hydraulische Energie umgewandelt wird und im zweiten Hydraulikkreislauf als hydraulische Energie zur Verfügung steht. Damit kann zum Antrieb der zweiten Hydraulikpumpe auf bereits in der Hauptmaschine bestehende Antriebsstrukturen zurückgegriffen werden, ohne dass mit der durch den Anbau des Anbauantriebsmoduls gewünschten Hybridisierung der Baumaschine zusätzliche Umbaumaßnahmen innerhalb der Hauptmaschine zum Antrieb der zweiten Hydraulikpumpe im zweiten Hydraulikkreislauf erforderlich sind.

Es ist möglich, dass der erste Hydraulikkreislauf ein, insbesondere geschlossener, Fahrantriebshydraulikkreislauf ist, die erste Hydraulikpumpe eine Fahrantriebshydraulikpumpe und der erste Hydraulikmotor ein Fahrantriebshydraulikmotor ist. Damit umfasst die Hauptmaschine in diesem Fall somit einen Fahrantriebshydraulikkreislauf, der in den Hybridhydraulikkreislauf wenigstens teilweise über die hydraulische Verbindungsschnittstelle eingebunden werden kann. Der Fahrantriebshydraulikkreislauf kann auch zwei oder mehr, insbesondere in Parallelanordnung zueinander im ersten Hydrauliksystem bzw. ersten Hydraulikkreislauf angeordnete, Fahrantriebshydraulikmotoren aufweisen.

Der zweite Hydraulikkreislauf kann ein, insbesondere geschlossener, Schwingungserregerhydraulikkreislauf, die zweite Hydraulikpumpe eine Schwingungserregerantriebshydraulikpumpe und der zweite Hydraulikmotor ein Schwingungserregerantriebshydraulikmotor sein. Bodenverdichtungsmaschinen können zur Durchführung dynamischer Verdichtungsprozesse eine oder mehrere, insbesondere den als Walzbandagen ausgebildeten Fahreinrichtungen zugeordnete, Schwingungserregungseinrichtungen, beispielsweise ein oder mehrere Unwuchterreger, aufweisen. Der Schwingungserregerhydraulikkreislauf kann auch zwei oder mehr, insbesondere in Reihen- und/oder Parallelschaltung zueinander im zweiten Hydrauliksystem angeordnete, Schwingungserregerantriebshydraulikmotoren aufweisen.

Über den ersten Hydraulikkreislauf und den zweiten Hydraulikkreislauf hinaus kann die Hauptmaschine auch noch einen oder mehrere weitere Hydraulikkreisläufe aufweisen, die jeweils eine oder mehrere Hydraulikmotoren und/oder Hydraulikaktoren und eine oder mehrere Hydraulikpumpen umfassen können. Jeweils zumindest wenigstens eine der Hydraulikpumpen des einen oder der mehreren weiteren Hydraulikkreisläufe kann mit der ersten und/oder der zweiten Hydraulikpumpe des ersten und/oder zweiten Hydraulikkreislaufes über die Kopplungseinrichtung und/oder eine oder mehrere weitere Kopplungseinrichtungen antriebsverbunden sein und auf diese Weise wie vorstehend bereits zur zweiten Hydraulikpumpe des zweiten Hydraulikkreislaufes indirekt und unter mehrfacher, insbesondere zweifacher, Energieumwandlung von dem Sekundärantriebsaggregat des Anbauantriebsmoduls angetrieben werden.

Hinsichtlich der konkreten Ausbildung der Kopplungseinrichtung zwischen der ersten Hydraulikpumpe und der zweiten Hydraulikpumpe kann auf verschiedene bevorzugte Weiterbildungen zurückgegriffen werden. So kann es beispielsweise vorgesehen sein, dass die Kopplungseinrichtung als eine direkte mechanische Drehmomentübertragungsverbindung zwischen der ersten und der zweiten Hydraulikpumpe ausgebildet ist. Dies kann beispielsweise eine Verbindungswelle sein, insbesondere innerhalb einer Tandempumpenanordnung der ersten und der zweiten Hydraulikpumpe. Die mechanische Drehmomentübertragungsverbindung kann ergänzend oder alternativ getriebefrei ausgebildet sein und/oder insbesondere von der ersten Hydraulikpumpe zur zweiten Hydraulikpumpe hin eine 1:1-Übersetzung aufweisen. Weiter ergänzend oder alternativ ist es auch möglich, dass die Kopplungseinrichtung als ein sich zwischen der ersten und der zweiten Hydraulikpumpe erstreckender bzw. als ein sich von der ersten Hydraulikpumpe kommender und die zweite Hydraulikpumpe durchsetzender Wellendurchtrieb ausgebildet ist. Es kann weiter ergänzend oder alternativ auch ein Pumpenverteilergetriebe zur mechanischen Übertragungsverbindung von zwei oder mehreren Hydraulikpumpen vorhanden sein. Die genannten bevorzugten und beispielhaften Ausbildungen der Kopplungseinrichtung können ergänzend oder alternativ in dieser Weise auch zum Antrieb einer oder mehrerer Hydraulikpumpen eines oder mehrerer weiterer Hydraulikkreisläufe der Hauptmaschine vorgesehen und von der Hauptmaschine umfasst sein.

Die Hauptmaschine kann eine oder mehrere Kupplungseinrichtungen aufweisen, insbesondere im Bereich mechanischer Antriebsstränge zwischen der ersten Hydraulikpumpe und der zweiten Hydraulikpumpe und/oder einer oder mehrerer Hydraulikpumpen von einem oder mehreren weiteren Hydraulikkreisläufen. Die Kupplungseinrichtung bzw. Kupplungseinrichtungen können insbesondere als Schaltkupplung ausgebildet sein, um wahlweise eine Drehmomentübertragung zwischen den jeweiligen Hydraulikpumpen zu aktivieren oder zu deaktivieren.

Es kann vorgesehen sein, dass die Hauptmaschine eine Aufnahmeeinrichtung aufweist, die zur lösbaren Aufnahme eines Bodenbearbeitungsaggregates ausgebildet ist. Eine Aufnahmeeinrichtung bezeichnet vorliegend insbesondere eine Einrichtung, die zur wenigstens teilweise formschlüssigen und zerstörungsfrei lösbaren Aufnahme und/oder Lagerung des Bodenbearbeitungsaggregates ausgebildet ist. Die Aufnahmeeinrichtung kann dazu eine geeignete Aufnahmeformation, beispielsweise eine hakenartig ausgebildete Aufnahmeformation, aufweisen. An dem oder den Bodenbearbeitungsaggregaten kann eine Gegenformation vorgesehen sein, die zum formschlüssigen Eingriff in die Aufnahmeformation der Hauptmaschine ausgebildet ist. Bei dem Bodenbearbeitungsaggregat kann es sich beispielsweise um einen Splittstreuer oder eine Anbaurüttelplatte handeln. Optimal ist es nun, wenn das Anbauantriebsmodul über diese Aufnahmeeinrichtung anstelle des jeweiligen Bodenbearbeitungsaggregates an der Hauptmaschine der Baumaschine gelagert ist. Auf diese Weise ist zur Aufnahme des Anbauantriebsmoduls an der Hauptmaschine keine zusätzliche Aufnahmeeinrichtung erforderlich, wodurch der erforderliche Umrüstaufwand der Hauptmaschine zur Aufnahme des Anbauantriebsmoduls weiter gesenkt werden kann. Konkret kann es sich bei der Aufnahmeeinrichtung beispielsweise um eine von der Hauptmaschine umfasste, insbesondere relativ zum Maschinenrahmen der Hauptmaschine verstellbare, Lagergabel handeln, ganz besonders umfassend zwei horizontal und quer zu einer Arbeits- bzw. Vorwärtsrichtung der Baumaschine zueinander beabstandete und/oder über die Front- oder Heckaußenmantelfläche der übrigen Hauptmaschine wenigstens teilweise in Horizontalrichtung und in und/oder entgegen der Vorwärtsrichtung vorstehende Lager- bzw. Aufnahmearme.

Um die Anordnung des Anbauantriebsmoduls an die Hauptmaschine zu erleichtern, ist es möglich, dass die Aufnahmeeinrichtung zwischen einer Aufnahmeposition und einer Betriebsposition verstellbar ist. Die Aufnahmeposition kann insbesondere derart ausgebildet sein, dass diese zur Aufnahme des auf dem Bodenuntergrund aufstehenden Anbauantriebsmoduls ausgebildet ist. Die Betriebsposition ist dagegen idealerweise derart ausgebildet, dass das von der Aufnahmeeinrichtung aufgenommene Anbauantriebsmodul gegenüber dem Bodenuntergrund angehoben ist und somit kontaktfrei gegenüber dem Bodenuntergrund von der Hauptmaschine mitgeführt werden kann. Die Aufnahmeeinrichtung kann somit insbesondere derart gegenüber der übrigen Hauptmaschine verstellbar sein, dass sie zumindest wenigstens teilweise zwischen der Aufnahmeposition und der Betriebsposition in Vertikalrichtung verstellt wird bzw. höhenverstellbar ist. Die Aufnahmeeinrichtung kann ganz besonders zwischen der Aufnahmeposition und der Betriebsposition verschwenkbar an der übrigen Hauptmaschine gelagert sein, insbesondere um eine horizontal verlaufende Schwenkachse.

Es kann ergänzend oder alternativ ferner eine Antriebseinrichtung von der Hauptmaschine umfasst sein, die zum Antrieb der Verstellbewegung der Aufnahmeeinrichtung zwischen der Betriebsposition und der Aufnahmeposition ausgebildet ist. Dies können insbesondere beispielsweise ein oder mehrere Linearaktoren, insbesondere Hydraulikzylinder, sein.

Es kann weiter ergänzend oder alternativ eine Arretiereinrichtung von der Hauptmaschine umfasst sein, die zur Feststellung der Aufnahmeeinrichtung in der Betriebsposition und/oder der Aufnahmeposition ausgebildet ist. Dies kann beispielsweise ein Sperrriegel oder ähnliches sein.

Ergänzend oder alternativ ist es auch möglich, dass das Anbauantriebsmodul eine verstellbare Aufnahmeeinrichtung aufweist. Diese kann insbesondere zwischen einer Aufnahmeposition und einer Betriebsposition, insbesondere angetrieben, verstellbar und/oder arretierbar sein, wie vorstehend zur Hauptmaschine beschrieben.

Bei dem Sekundärantriebsaggregat des Anbauantriebsmoduls kann es sich insbesondere um einen elektrischen Energiespeicher und einen mit elektrischer Energie aus dem elektrischen Energiespeicher angetriebenen Elektromotor handeln. Der Elektromotor ist zum Antrieb, insbesondere Direktantrieb, der Anbaumodulhydraulikpumpe ausgebildet. Bei dem elektrischen Energiespeicher kann es sich ganz besonders um einen wiederaufladbaren elektrischen Energiespeicher handeln, insbesondere um eine oder mehrere Batterien.

Das Anbauantriebsmodul umfasst vorzugsweise einen Tragrahmen, der, insbesondere unabhängig vom Maschinenrahmen der Hauptmaschine, beispielsweise die wesentliche Tragstruktur des Anbauantriebsmoduls bilden kann. Es ist vorteilhaft, wenn an diesem Tragrahmen das Sekundärantriebsaggregat, der elektrische Energiespeicher und die Anbaumodulhydraulikpumpe gelagert sind. Es kann vorgesehen sein, dass die Gegenformation unmittelbar vom Tragrahmen gebildet wird oder zumindest direkt mit diesem verbunden ist.

Um den Aufwand insbesondere zur betriebsfähigen Anbindung des Anbauantriebsmoduls an die Hauptmaschine weiter zu reduzieren, ist es vorteilhaft, wenn die trennbare hydraulische Verbindungsschnittstelle eine von der Hauptmaschine umfasste Anschlussventileinrichtung aufweist. Die von der Anschlussventileinrichtung umfassten Anschlussventile können idealerweise zumindest zwischen einer Offenstellung und einer Schließstellung verstellt werden bzw. verstellbar ausgebildet sein. Die Anschlussventileinrichtung kann Teil eines Ventilblockes sein. Die Anschlussventileinrichtung kann Anschlussöffnungen, insbesondere der Anschlussventile, umfassen, die in der Außenmantelfläche der Baumaschine, insbesondere an der Heck- und/oder Front- und/oder Oberseite, der Baumaschine, positioniert sind oder innerhalb der Außenmantelfläche der Baumaschine an einer von außerhalb der Baumaschine vergleichsweise gut zu erreichenden Stelle, beispielsweise hinter einer Wartungsklappe oder ähnlichem, liegen.

Ideal ist es, wenn der Teil der hydraulischen Anschlussschnittstelle, insbesondere die Anschlussventileinrichtung, auf Seiten der Hauptmaschine auf einer dem Anbauantriebsmodul zugewandten Seite und/oder einem direkt zum Anbauantriebsmodul benachbarten Seite der Hauptmaschine angeordnet ist, um hydraulische Leitungswege zwischen der Hauptmaschine und dem Anbauantriebsmodul möglichst kurz zu halten.

Die trennbare hydraulische Verbindungsschnittstelle kann auf Seiten der Hauptmaschine einen Zulauf- bzw. Zufuhranschluss, insbesondere als Teil der ersten Leitungsverbindung, und einen Rücklaufanschluss, insbesondere als Teil der zweiten Leitungsverbindung, umfassen. Diese können Teil der Anschlussventileinrichtung und/oder des Ventilblockes sein. Das Anbauantriebsmodul kann eine mit dem Zufuhranschluss verbindbare Zulaufleitung und eine mit dem Rücklaufanschluss verbindbare Rücklaufleitung umfassen, wobei die Zulaufleitung und die Rücklaufleitung über die Anbaumodulhydraulikpumpe auf Seiten des Anbauantriebsmoduls miteinander fluidleitend verbunden sind. Auf diese Weise ist es insbesondere möglich, den Hybridhydraulikkreislauf insgesamt als geschlossenen Hydraulikkreislauf auszubilden, der teilweise im Anbauantriebsmodul und teilweise in der Hauptmaschine verläuft.

Hinsichtlich der konkreten Anordnung der ersten Hydraulikpumpe und des ersten Hydraulikmotors im Hybridhydraulikkreislauf bzw. hinsichtlich der Positionierung einer Einspeisestelle und einer Abführstelle von Hydraulikfluid, das im Hybridhydraulikkreislauf zirkuliert, in und aus dem ersten Hydraulikkreislauf bestehen verschiedene Möglichkeiten. Vorteilhaft ist es, wenn der Hybridhydraulikkreislauf derart ausgebildet ist, dass die erste Hydraulikpumpe und der erste Hydraulikmotor, insbesondere auf Seiten der Hauptmaschine, parallel zueinander im Hybridhydraulikkreislauf geschaltet sind. Dies kann insbesondere dazu führen, dass in einem Teilbereich des ersten Hydraulikkreislaufes die Durchströmungsrichtung des Hydraulikfluids bei einer Hydraulikfluidversorgung von der über das Sekundärantriebsaggregat angetriebenen Anbaumodulhydraulikpumpe gegenüber einer Hydraulikfluidversorgung des ersten Hydraulikfluidkreislaufes von der über das Primärantriebsaggregat der Hauptmaschine angetriebenen ersten Hydraulikpumpe umgekehrt wird. Mit anderen Worten kann eine im ersten Hydraulikkreislauf durch die erste Hydraulikpumpe bewirkte Hydraulikfluidförderung über die erste Hydraulikpumpe geändert werden zu einer über zwei oder mehr parallel zueinander verlaufende Leitungsstränge verlaufende Fluidförderung innerhalb des ersten Hydraulikkreislaufes bei einer Hydraulikfluidförderung durch die Anbaumodulhydraulikpumpe und eine Ein- und Ausspeisung von Hydraulikfluid in den ersten Hydraulikkreislauf über beispielsweise die Einspeisestelle und die Abführstelle.

Grundsätzlich ist es möglich, dass der erste Hydraulikkreislauf ergänzend zu dem ersten Hydraulikmotor wenigstens einen weiteren Hydraulikmotor aufweist, der ebenfalls mit der ersten Hydraulikpumpe in einer fluidleitenden Verbindung steht. Der erste Hydraulikmotor und der wenigstens eine weitere Hydraulikmotor des ersten Hydraulikkreislaufes können in Serie, besonders bevorzugt allerdings parallel zueinander im ersten Hydraulikfluidkreislauf angeordnet sein. Es kann ergänzend oder alternativ vorgesehen sein, dass der Hybridhydraulikkreislauf derart ausgebildet ist, dass der erste Hydraulikmotor und/oder der wenigstens eine weitere Hydraulikmotor und die erste Hydraulikpumpe parallel zueinander geschaltet sind bzw. parallel zueinander und damit nicht nacheinander von im Hybridhydraulikkreislauf zirkulierendem Hydraulikfluid durchströmt werden.

Es ist auch möglich, den Hybridhydraulikkreislauf derart auszubilden, dass der erste Hydraulikmotor und der wenigstens eine weitere Hydraulikmotor parallel zueinander und die erste Hydraulikpumpe aber in Reihe zum ersten Hydraulikmotor und/oder zu dem wenigstens einen weiteren Hydraulikmotor angeordnet ist.

Insbesondere auch um das Funktionsspektrum des Hybridhydraulikkreislaufes weiter zu erhöhen, ist es insbesondere auch möglich, die erste und/oder die zweite Hydraulikpumpe und/oder die Anbauhydraulikpumpe als Verstellhydraulikpumpen auszubilden. Eine Verstellhydraulikpumpe zeichnet sich dadurch aus, dass sie ein variables Schluckvolumen umfasst bzw. das von ihr geförderte Volumen Hydraulikfluid pro Umdrehung variabel ist. Optimal ist es, wenn eine oder mehrere dieser Verstellhydraulikpumpen derart ausgebildet sind, dass sie ausgehend von einem maximalen Schluckvolumen zur Verringerung des Schluckvolumens bis auf ein Schlucknullvolumen verstellbar ausgebildet sind. Beim Schlucknullvolumen wird die Hydraulikpumpe zwar angetrieben. Das Schluckvolumen ist in diesem Fall allerdings auf null abgesenkt, so dass trotz ihres angetriebenen Zustandes kein Hydraulikfluid von der Hydraulikfluidpumpe gefördert wird. Umgekehrt kann die auf das Schlucknullvolumen eingestellte Hydraulikpumpe insbesondere auch dann, wenn der Hybridhydraulikkreislauf betrieben wird und die Hydraulikpumpe dann als Hydraulikmotor betrieben wird, dazu genutzt werden, einen oder mehrere Leitungsabschnitte des ersten Hydraulikkreislaufe zu sperren und/oder eine Drehmomentübertragung von der ersten Hydraulikpumpe über die Kopplungseinrichtung auf die zweite Hydraulikpumpe zu verhindern.

Besonders bevorzugt ist es, wenn die erste und/oder die zweite Hydraulikpumpe und/oder die Anbauhydraulikpumpe als Pumpe-Motor-Einheit ausgebildet sind. Eine als Pumpe-Motor-Einheit ausgebildete Hydraulikpumpe kann wahlweise als Hydraulikpumpe oder als Hydraulikmotor in einem Hydraulikkreislauf betrieben werden. Auf diese Weise kann beispielsweise die als Pumpe-Motor-Einheit ausgebildete erste Hydraulikpumpe besonders gut zum Antrieb der zweiten Hydraulikpumpe über die Kopplungseinrichtung im Betrieb des Hybridhydraulikkreislaufes genutzt werden. Ergänzend oder alternativ kann die als Pumpe-Motor-Einheit ausgebildete Anbauhydraulikpumpe zum Betrieb des Hybridhydraulikkreislaufes in einem Generatorbetrieb zum Laden des elektrischen Energiespeichers des Anbauantriebsmoduls genutzt werden, indem der in diesem Fall als Generator betriebene Elektromotor des Anbauantriebsmoduls durch die in diesem Fall als den Generator antreibender Hydraulikmotor wirkende Anbauhydraulikpumpe angetrieben wird. In dieser Betriebsweise erfolgt somit der Antrieb der ersten Hydraulikpumpe direkt und der Antrieb der als Hydraulikmotor wirkenden Anbaumodulhydraulikpumpe über den Hybridhydraulikkreislauf indirekt über das Primärantriebsaggregat der Hauptmaschine.

Die Baumaschine, insbesondere die Hauptmaschine, kann eine Steuereinheit umfassen, die zur, insbesondere wenigstens teilweisen, Steuerung der ersten und/oder der zweiten Hydraulikpumpe und/oder der Anbauhydraulikpumpe ausgebildet ist. Es kann insbesondere vorgesehen sein, dass die Steuereinheit zur Einstellung und/oder Regelung eines oder mehrerer Schluckvolumina der in diesem Fall idealerweise als Verstellhydraulikpumpen ausgebildeten ersten und/oder zweiten Hydraulikpumpe und/oder Anbauhydraulikpumpe ausgebildet ist. Dazu kann die Steuereinheit über eine oder mehrere geeignete, kabellose und/oder kabelgebundene, Steuersignalübertragungsleitungen mit der ersten und/oder der zweiten Hydraulikpumpe und/oder der Anbauhydraulikpumpe verbunden sein.

Die Baumaschine kann einen oder mehrere Sensoren aufweisen, die über eine oder mehrere geeignete, kabellose und/oder kabelgebundene, Sensorsignalübertragungsleitungen mit der Steuereinheit verbunden sind. Mithilfe eines oder mehrerer der Sensoren können verschiedene, für den Betrieb der Baumaschine relevante Betriebs- und/oder Zustandsparameter erfasst und an die Steuereinheit zur Steuerung und/oder Regelung der Verstellpositionen bzw. Schluckvolumina der als Verstellhydraulikpumpe und/oder Motor-Pumpe-Einheit ausgebildeten ersten und/oder der zweiten Hydraulikpumpe und/oder Anbauhydraulikpumpe übermittelt werden. Derartige Sensoren können beispielsweise ein Ladezustandssensor zum Ermitteln eines aktuellen Ladezustandes des elektrischen Energiespeichers des Anbauantriebsmoduls und/oder ein oder mehrere Drehzahlsensoren des Primärantriebsaggregates und/oder des Sekundärantriebsaggregates und/oder eines oder mehrerer der Hydraulikmotoren, insbesondere des ersten Hydraulikmotors und/oder des zweiten Hydraulikmotors und/oder eines oder mehrerer des oder der wenigstens einen weiteren Hydraulikmotors/-en, ein oder mehrere Durchflusssensoren und/oder ein oder mehrere Drucksensoren zur Ermittlung eines oder mehrerer Hydraulikdrücke innerhalb des ersten Hydraulikkreislaufes und/oder des zweiten Hydraulikkreislaufes und/oder des Hybridhydraulikkreislaufes etc., sein.

Die vorstehend erwähnte Steuereinheit ist vorzugsweise von der Hauptmaschine umfasst. Es kann allerdings ergänzend oder alternativ vorgesehen sein, dass das Anbauantriebsmodul eine Modulsteuereinheit aufweist, die über eine Signalübertragungsverbindung, beispielsweise kabellos und/oder kabelgebunden, mit der Steuereinheit, insbesondere der Hauptmaschine kommuniziert und mit dieser Steuerbefehle und/oder Sensordaten austauscht. Die Modulsteuereinheit kann ganz besonders zur Steuerung eines Ladevorgangs des elektrischen Energiespeichers im Generatorbetrieb ausgebildet sein. Im Normalbetrieb der Baumaschine ist es bevorzugt, wenn die Fahr- und Betriebssteuerung von der Steuereinheit hierarchisch übergeordnet gegenüber der Modulsteuereinheit erfolgt. Es kann allerdings vorgesehen sein, dass die Steuereinheit ein Hierarchiewechselmodul umfasst, dass derart ausgebildet ist, dass die Hierarchiereihenfolge bei einem Betrieb der Baumaschine im vorstehend bereits beschriebenen Generatorbetrieb wechselt und die Modulsteuereinheit hierarchisch übergeordnet gegenüber der Steuereinheit der Hauptmaschine ist.

Zwischen der ersten Hydraulikpumpe und/oder der zweiten Hydraulikpumpe und dem Primärantriebsaggregat kann eine Primärantriebskupplung vorhanden sein, die in einem entkuppelten Zustand eine Drehmomentübertragung im Primärantriebsstrang vom Primärantriebsaggregat zur ersten Hydraulikpumpe und/oder zur zweiten Hydraulikpumpe trennt. Die Primärantriebskupplung kann somit als zwischen einer eingekuppelten, Drehmoment übertragenden, und einer ausgekuppelten, kein Drehmoment übertragenden, Stellung verstellbare Kupplung bzw. als Schaltkupplung ausgebildet sein, beispielsweise als Reib- oder Klauenkupplung oder ähnliches. Auf diese Weise ist es möglich, beim Betrieb des Hybridhydraulikkreislaufes bzw. beim Antrieb der Baumaschine über das Sekundäraggregat des Anbauantriebsmoduls das Primärantriebsaggregat von Primärantriebsstrang auszukuppeln, so dass dieses in dieser Betriebsphase nicht mitgeschleppt werden muss. Dadurch kann die Effizienz des Antriebs der Baumaschine über das Sekundärantriebsaggregat gesteigert werden.

Ein weiterer Aspekt der Erfindung betrifft ein Verfahren zum Umrüsten einer Baumaschine, insbesondere einer erfindungsgemäßen Baumaschine, wie vorstehend beschrieben. Insofern werden hiermit Angaben zur erfindungsgemäßen Baumaschine ausdrücklich auch im Zusammenhang mit dem erfindungsgemäßen Verfahren optional in Bezug genommen.

Die Baumaschine, die das Verfahren betrifft, umfasst eine Hauptmaschine mit einem Primärantriebsaggregat, insbesondere einem Verbrennungsmotor, und ein Hydrauliksystem. Das Hydrauliksystem weist einen ersten Hydraulikkreislauf mit einer ersten Hydraulikpumpe und einem ersten Hydraulikmotor auf. Teil des Hydrauliksystems der Hauptmaschine kann ferner ein zweiter Hydraulikkreislauf mit einer zweiten Hydraulikpumpe und mit einem zweiten Hydraulikmotor sein. Die erste Hydraulikpumpe und die zweite Hydraulikpumpe können miteinander über einer Kopplungseinrichtung, insbesondere direkt mechanisch, antriebsverbunden sein und zusammen über einen Primärantriebsstrang vom Primärantriebsaggregat antreibbar sein bzw. angetrieben werden. Hinsichtlich weiterer möglicher Merkmale der Hauptmaschine wird Bezug auf die vorhergehenden Angaben zur Hauptmaschine der erfindungsgemäßen Baumaschine genommen.

Für das erfindungsgemäße Verfahren ist es nun in einem Schritt a) vorgesehen, dass ein Aufnehmen eines Anbauantriebsmoduls erfolgt, konkret ein Aufnehmen des Anbauantriebsmoduls durch die Hauptmaschine. Mit anderen Worten erfolgt in diesem Schritt eine Verbindung des Anbauantriebsmoduls mit der Hauptmaschine dahingehend, dass die Hauptmaschine nach dem Aufnehmen das Anbauantriebsmodul in einem Fahrbetrieb mit sich mitführt. Hinsichtlich weiterer möglicher Merkmale des Anbauantriebsmodus wird Bezug auf die vorhergehenden Angaben zum Anbauantriebsmodul der erfindungsgemäßen Baumaschine genommen.

Das erfindungsgemäße Verfahren umfasst ferner in einem Schritt b) ein Herstellen fluidleitender Verbindungen, insbesondere über eine erste Leitungsverbindung und über eine zweite Leitungsverbindung mit dem ersten Hydraulikkreislauf, zwischen dem Anbauantriebsmodul und der Hauptmaschine derart, dass ein sich wenigstens teilweise durch eine Anbaumodulhydraulikpumpe des Anbauantriebsmoduls und den ersten Hydraulikfluidkreislauf erstreckender bzw. verlaufender und die erste Hydraulikpumpe und/oder den ersten Hydraulikmotor antreibender Hybridhydraulikkreislauf erhalten wird. Durch die Aufnahme des Anbauantriebsmoduls durch die Hauptmaschine bzw. den damit verbundenen Erhalt der Baumaschine als Gesamtheit aus der Hauptmaschine und dem Anbauantriebsmodul wird somit ein gegenüber der isolierten Hauptmaschine zusätzlicher Hybridhydraulikkreislauf erhalten, der sich über die Hauptmaschine hinaus auch durch das Anbauantriebsmodul erstreckt. Der Hybridhydraulikkreislauf verläuft zudem teilweise durch wenigstens Teile des ersten Hydraulikkreislaufes der Hauptmaschine. Hinsichtlich weiterer möglicher Merkmale der Baumaschine wird Bezug auf die vorhergehenden Angaben zur erfindungsgemäßen Baumaschine genommen.

In einem Schritt c) ist es nun vorgesehen, dass ein Antreiben der Anbaumodulhydraulikpumpe durch ein vom Anbauantriebsmodul umfasstes Sekundärantriebsaggregat und dadurch ein Fördern von Hydraulikfluid im Hybridhydraulikkreislauf zum Antreiben der ersten Hydraulikpumpe und/oder des ersten Hydraulikmotors des ersten Hydraulikkreislaufes erfolgt. Die für das Fördern von Hydraulikfluid durch wenigstens Teile des ersten Hydraulikkreislaufes verantwortliche Antriebsquelle wird in diesem Fall somit zumindest nicht mehr nur vom Primärantriebsaggregat der Hauptmaschine gebildet, sondern zumindest ergänzend und insbesondere ausschließlich durch das Sekundärantriebsaggregat des Anbauantriebsmoduls. Ideal ist es, wenn das Fördern von Hydraulikfluid in wenigstens Teilen des ersten Hydraulikkreislaufes ausschließlich auf vom Sekundärantriebsaggregat erzeugte Antriebsenergie zurückgeht und das Primärantriebsaggregat beispielsweise deaktiviert ist. Besonders bevorzugt ist es ferner, wenn die für den Betrieb der für den Fahr- und/oder Arbeitsbetrieb erforderlichen Hydraulikaggregate der Baumaschine benötigte Antriebsenergie im Schritt c) ausschließlich von dem Sekundärantriebsaggregat erzeugt wird und das Primärantriebsaggregat dabei vollständig deaktiviert ist bzw. in einem Zustand ist, in dem es keine Antriebsenergie erzeugt. Es kann auch von einem Primärantriebsstrang über eine in einer entkuppelten Schaltstellung befindlichen Schaltkupplung entkuppelt sein.

Ideal ist es, wenn im Schritt c) ein Antreiben der Anbaumodulhydraulikpumpe auf Seiten des Anbauantriebsmoduls elektromotorisch bzw. durch einen Elektromotor erfolgt. Elektromotoren haben gegenüber Verbrennungsmotoren den Vorteil, dass sie praktisch emissionsfrei betrieben werden können, vorliegend insbesondere durch ein Beziehen elektrischer Energie aus einem elektrischen Energiespeicher des Anbauantriebsmoduls. In diesem Fall ermöglicht das erfindungsgemäße Verfahren somit durch die Aufnahme und den Anschluss des Anbauantriebsmoduls an die Hauptmaschine eine vergleichsweise einfache und vor allem zügige Umstellung der Antriebsquelle vom Primärantriebsaggregat auf das Sekundärantriebsaggregat und damit beispielsweise eine Umstellung von einem verbrennungsmotorischen Antrieb (sofern es sich bei dem Primärantriebsaggregat um einen Verbrennungsmotor handelt) auf einen elektromotorischen Antrieb (sofern es sich bei dem Sekundärantriebsaggregat um einen Elektromotor handelt).

Das Anbauantriebsmodul ist somit als eine für sich handhabbare Gesamtheit, beispielsweise umfassend einen eigenen Tragrahmen, ausgebildet. Im praktischen Einsatz der Hauptmaschine bzw. der Baumaschine kann es vorteilhaft sein, wenn die zur Umrüstung der Hauptmaschine zur Gesamtheit aus Hauptmaschine und Anbauantriebsmodul erforderlichen Hilfsmittel möglichst auf ein Minimum reduziert werden. Bevorzugt ist es daher auch, wenn die Hauptmaschine zur Aufnahme des Anbauantriebsmoduls nicht auf ein zusätzliches Hubfahrzeug, wie beispielsweise einen Gabelstapler oder einen Kran, angewiesen ist. Um dies zur ermöglichen, kann es vorgesehen sein, dass das Aufnehmen des Anbauantriebsmoduls durch die Hauptmaschine des Anbauantriebsmoduls mithilfe einer zwischen einer Aufnahmeposition und einer Betriebsposition verstellbaren Aufnahmeeinrichtung, insbesondere der Hauptmaschine, erfolgt. Die Aufnahmeposition bezeichnet dabei insbesondere eine solche Position der Aufnahmeeinrichtung, in der sie das auf dem Bodenuntergrund aufstehende Anbauantriebsmodul mechanisch kontaktieren und aus der heraus sie das auf dem Bodenuntergrund aufstehende Anbauantriebsmodul anheben kann. Die Betriebsposition bezeichnet dagegen beispielsweise eine Position der Aufnahmeeinrichtung, in der das durch sie aufgenommene Anbauantriebsmodul kontaktfrei gegenüber dem Bodenuntergrund an der Hauptmaschine gehalten wird und von dieser im Fahrbetrieb mitgeführt werden kann. Das Verstellen der Aufnahmeeinrichtung zwischen der Aufnahmeposition und der Betriebsposition kann beispielsweise eine lineare und/oder gekurvte Relativbewegung der Aufnahmeeinrichtung gegenüber einem Maschinenrahmen der Hauptmaschine umfassen und somit ein Verschieben und/oder Verschwenken der Aufnahmeeinrichtung relativ zum Maschinenrahmen der Hauptmaschine sein. Das Verstellen der Aufnahmeeinrichtung kann ferner durch eine Antriebseinrichtung angetrieben erfolgen, beispielsweise mithilfe eines Linearaktors, insbesondere eines Hydraulikzylinders.

Bevorzugt ist es, wenn im Schritt a) zunächst ein Verstellen der Aufnahmeeinrichtung in die Aufnahmeposition zur Aufnahme des Anbauantriebsmoduls und anschließend in die Betriebsposition zusammen mit dem Anbauantriebsmodul erfolgt, wobei das Verstellen aus der Aufnahmeposition in die Betriebsposition insbesondere ein Heben und/oder Hochschwenken des Anbauantriebsmoduls umfasst. Auf diese Weise ist es beispielsweise möglich, dass die Hauptmaschine aus eigenem Antrieb zunächst in eine Position zur Aufnahme des Anbauantriebsmoduls relativ zum Anbauantriebsmodul rangiert wird und diese anschließend auch aus eigenem Antrieb anhebt.

Ergänzend oder alternativ ist es auch möglich, dass das Anbaubetriebsmodul eine mithilfe einer zwischen einer Aufnahmeposition und einer Betriebsposition verstellbare Aufnahmeeinrichtung umfasst und die Hauptmaschine eine zur lagernden Aufnahme der Aufnahmeeinrichtung ausgebildete Gegenformation aufweist. In diesem Fall erfolgt im Schritt a) daher auch bevorzugt dann, wenn die Hauptmaschine in mit ihrer Gegenformation in einer geeigneten Relativlage relativ zur Aufnahmeeinrichtung des Anbaubetriebsmoduls ist, ein Verstellen der Aufnahmeeinrichtung zunächst in die Aufnahmeposition am bzw. auf Seiten des Anbaubetriebsmoduls und anschließend und Verstellen in die Betriebsposition am bzw. auf Seiten des Anbaubetriebsmoduls, wobei sich in diesem Fall das Anbaubetriebsmodul vorzugsweise selbst zum Heben und/oder Hochschwenken gegenüber der Hauptmaschine antreibt.

Auch das Betreiben der im Hybridhydraulikkreislauf liegenden Komponenten kann variieren. So kann es im Schritt c) beispielsweise vorgesehen sein, dass ein paralleles Antreiben innerhalb des Hybridhydraulikkreislaufes durch von der Anbaumodulhydraulikpumpe gefördertes Hydraulikfluid von gleichzeitig wenigstens zwei oder mehr Komponenten erfolgt. Konkret ist es beispielsweise möglich, dass im Hybridhydraulikkreislauf die, insbesondere als Pumpe-Motor-Einheit ausgebildete, erste Hydraulikpumpe, ganz besonders als Motor, und/oder der erste Hydraulikmotor und/oder wenigstens ein weiterer Hydraulikmotor von dem von der Anbaumodulhydraulikpumpe angetrieben bzw. mit hydraulischer Energie versorgt werden. Insbesondere für die, vorzugsweise als Pumpe-Motor-Einheit ausgebildete, erste Hydraulikpumpe kann dies auch eine Umkehrung einer Drehmomentübertragungsrichtung gegenüber einem Antrieb durch das Primärantriebsaggregat bewirkten Drehmomentübertragungsrichtung durch die erste Hydraulikpumpe bedeuten bzw. mit einer Funktionsumkehr der ersten Hydraulikpumpe von einer Pumpenfunktion bei einem Antrieb durch das Primärantriebsaggregat zu einer Motorfunktion bei einem Antrieb durch das Sekundärantriebsaggregat einhergehen.

Dies kann insbesondere bedeuten, dass im Schritt c) mithilfe einer Kopplungseinrichtung ein Antreiben wenigstens der zweiten Hydraulikpumpe im zweiten Hydraulikkreislauf durch eine, vorzugsweise direkte und/oder ausschließlich mechanische, Drehmomentübertragung über die Kopplungseinrichtung zwischen der ersten Hydraulikpumpe und der zweiten Hydraulikpumpe erfolgen kann. Mit anderen Worten kann es vorgesehen sein, dass die erste Hydraulikpumpe im Hybridhydraulikkreislauf funktional als Motor für die zweite Hydraulikpumpe des zweiten Hydraulikkreislaufes auf Seiten der Hauptmaschine wirkt. Insgesamt wird die zweite Hydraulikpumpe somit dann nicht mehr von dem Primärantriebsaggregat angetrieben, sondern mittelbar von dem Sekundärantriebsaggregat. Der zweite Hydraulikkreislauf und die in ihm eingebundenen Funktionskomponenten wie die zweite Hydraulikpumpe und der zweite Hydraulikmotor bleiben allerdings mithilfe der Kopplungseinrichtung vorzugsweise sowohl im Antriebsbetrieb durch das Primärantriebsaggregat der Hauptmaschine als auch im Antriebsbetrieb durch das Sekundärantriebsaggregat des Anbauantriebsmoduls voll und insbesondere unverändert betriebsfähig.

Es kann daher auch insbesondere vorgesehen sein, dass das erfindungsgemäße Verfahren einen als Fahrantriebshydraulikkreislauf ausgebildeten ersten Hydraulikkreislauf und einen als Arbeitsfunktionskreislauf, insbesondere Hydraulikkreislauf zum Antrieb eines oder mehrerer Schwingungserreger, ausgebildeten zweiten Hydraulikkreislauf betrifft bzw. die Baumaschine derart ausgebildet ist.

Optimal kann es sein, wenn die Anbaumodulhydraulikpumpe und/oder die, insbesondere als Pumpe-Motor-Einheit ausgebildete, erste Hydraulikpumpe und/oder die zweite Hydraulikpumpe als Verstellhydraulikpumpen ausgebildet sind. Verstellhydraulikpumpen zeichnen sich dadurch aus, dass ihr Schluckvolumen steuerbar und/oder regelbar ist, insbesondere mithilfe einer Steuereinheit. Hiervon ausgehend kann es nun vorgesehen sein, dass im Schritt c) ein Steuern eines oder mehrerer Betriebsparameter der Anbaumodulhydraulikpumpe und/oder ersten Hydraulikpumpe, insbesondere durch die Steuereinheit, erfolgt. Ein solcher Betriebsparameter kann beispielsweise das aktuelle Schluckvolumen und/oder eine aktuelle Drehzahl der Anbaumodulhydraulikpumpe und/oder der ersten Hydraulikpumpe und/oder der zweiten Hydraulikpumpe sein.

Bei dem Sekundärantriebaggregat handelt es sich vorzugsweise um einen Elektromotor. Der Elektromotor kann insbesondere mit einem elektrischen Energiespeicher des Anbauantriebsmoduls zur Übertragung elektrischer Energie verbunden sein. Für diese Anordnung kann es nun insbesondere vorgesehen sein, dass der Hybridhydraulikkreislauf in einem Generatorbetriebszustand die als Motor-Pumpe-Einheit ausgebildete Anbauhydraulikpumpe zum Laden des Energiespeichers des Anbauantriebsmoduls antreibt. Die dazu erforderliche Antriebsenergie kann über das Primärantriebsaggregat der Hauptmaschine erzeugt werden. Über den Primärantriebsstrang zwischen dem Primärantriebsaggregat und der ersten Hydraulikpumpe kann somit eine Förderung von Hydraulikfluid im Hybridhydraulikkreislauf angetrieben werden, über die ein Antrieb der in diesem Fall als Motor wirkenden Anbaumodulhydraulikpumpe erreichbar ist. Diese kann dann, beispielsweise ebenfalls über einer Kopplungseinrichtung, den in diesem Fall als Generator wirkenden Elektromotor des Anbauantriebsmoduls zur Erzeugung elektrischer Energie antreiben. Die dabei erzeugte elektrische Energie kann im elektrischen Energiespeicher des Anbauantriebsmoduls gespeichert werden. Die Baumaschine ist somit in der Lage, ihren elektrischen Energiespeicher selbst aufzuladen.

Die vorstehend beschriebene erfindungsgemäße Baumaschine und/oder das vorstehend beschriebene Verfahren zeichnen sich dadurch aus, dass zur Aufnahme des Anbauantriebsmoduls und zur Inbetriebnahme des Sekundärantriebs zum Antreiben der Baumaschine, wenn überhaupt, nur minimale Eingriffe in die Hydraulikarchitektur der Hauptmaschine vorgenommen werden müssen. Die erfindungsgemäße Baumaschine und/oder das erfindungsgemäße Verfahren eignen sich daher auch ganz besonders zum Nachrüsten einer Baumaschine bzw. einer Hauptmaschine mit einem Anbauantriebsmodul und damit einem Umrüsten einer konventionellen Baumaschine mit nur einem Verbrennungsmotor als Primärantriebsaggregat hin zu einer Hybridbaumaschine, die alternativ die für den Antrieb erforderliche Antriebsenergie vom Sekundärantriebsaggregat beziehen kann. Das erfindungsgemäße Verfahren kann daher insbesondere auch zu einem Verfahren zum Nachrüsten einer Baumaschine bzw. Hauptmaschine mit einem Anbauantriebsmodul, insbesondere einer Straßenbaumaschine, ganz besonders einer Tandemwalze, idealerweise zum Erhalt einer erfindungsgemäßen Baumaschine, weitergebildet werden.

Ausgangspunkt dieses Verfahrens kann zunächst die Hauptmaschine mit einem als von der Hauptmaschine lösbar ausgebildeten Bodenbearbeitungsaggregat sein. Bei dem Bodenbearbeitungsaggregat kann es sich beispielsweise um eine Rüttelplatte oder einen Splittstreuer handeln. Ausgehend von einer solchen Hauptmaschine mit Bodenbearbeitungsaggregat kann es nun vorgesehen sein, dass zunächst ein dem Schritt a) vorgelagertes Entfernen des Bodenbearbeitungsaggregates von der Hauptmaschine, beispielsweise durch ein Verstellen einer Aufnahmeeinrichtung wie vorstehend beschrieben aus der Betriebsposition in die Aufnahmeposition zum Absetzen des Bodenbearbeitungsaggregates, und im Schritt a) das Aufnehmen und Lagern des Anbauantriebsmoduls über Lagereinrichtungen der Aufnahmeeinrichtung, an denen vormals das Bodenbearbeitungsaggregat gelagert war, erfolgt. Auf diese Weise erfolgt die zueinander austauschbare Anbindung des Bodenbearbeitungsaggregates und des Anbauantriebsmoduls somit über dieselben Lagereinrichtungen der Hauptmaschine. Dies kann zwar bedeuten, dass auf diese Weise keine gleichzeitige Aufnahme sowohl des Bodenbearbeitungsaggregates als auch des Anbauantriebsmoduls möglich ist. Dieser mögliche Nachteil wird allerdings durch den geringen erforderlichen Umbauaufwand und der gewonnenen Antriebsalternative über das Anbauantriebsmodul überwogen.

Es kann vorgesehen sein, dass im Betrieb der Baumaschine Steuerdaten zwischen einer Steuereinheit der Baumaschine und einer Modulsteuereinheit des Anbauantriebsmoduls ausgetauscht werden. Dazu können eine oder mehrere Signalübertragungsverbindungen zwischen der Hauptmaschine und dem Anbauantriebsmodul vorgesehen sein. Diese können beispielsweise kabellos und/oder kabelgebunden sein. Es ist ergänzend oder alternativ auch möglich, dass sich die Hauptmaschine und das Anbauantriebsmodul einseitig und/oder gegenseitig identifizieren und/oder berechtigen. Dies kann beispielsweise durch den Austausch geeigneter Berechtigungskennungen und/oder ähnlichem erfolgen.

Die Erfindung wird nachstehend anhand der in den Figuren gezeigten Ausführungsbeispiele näher erläutert. Es zeigen schematisch:
- Fig. 1: eine Seitenansicht auf eine Hauptmaschine mit einem Bodenbearbeitungsaggregat;
- Fig. 2: eine Seitenansicht auf eine Baumaschine mit einer Hauptmaschine und einem Anbauantriebsaggregat;
- Fig. 3: eine schematische Ansicht eines Antriebssystems einer Baumaschine in einer ersten Ausführungsform;
- Fig. 4: eine schematische Ansicht eines Antriebssystems einer Baumaschine in einer zweiten Ausführungsform;
- Fig. 5: ein Betriebszustand eines Antriebssystems einer Baumaschine in einem Antriebszustand beim Antrieb über ein Primärantriebsaggregat;
- Fig. 6: ein Betriebszustand eines Antriebssystems einer Baumaschine in einem Antriebszustand beim Antrieb über ein Sekundärantriebsaggregat;
- Fig. 7: ein Betriebszustand eines Antriebssystems einer Baumaschine in einem erweiterten Antriebszustand beim Antrieb über ein Sekundärantriebsaggregat;
- Fig. 8: ein Antriebssystem einer Baumaschine in einem Generatorbetriebszustand;
- Fig. 9: ein Ablaufdiagramm eines erfindungsgemäßen Verfahrens; und
- Fig. 10: Prinzipskizze zur Funktionsweise der Steuereinheit.

Gleiche beziehungsweise gleich wirkende Bauteile sind in den Figuren mit den gleichen Bezugszeichen bezeichnet. Sich wiederholende Bauteile sind nicht notwendigerweise in jeder Figur gesondert bezeichnet.

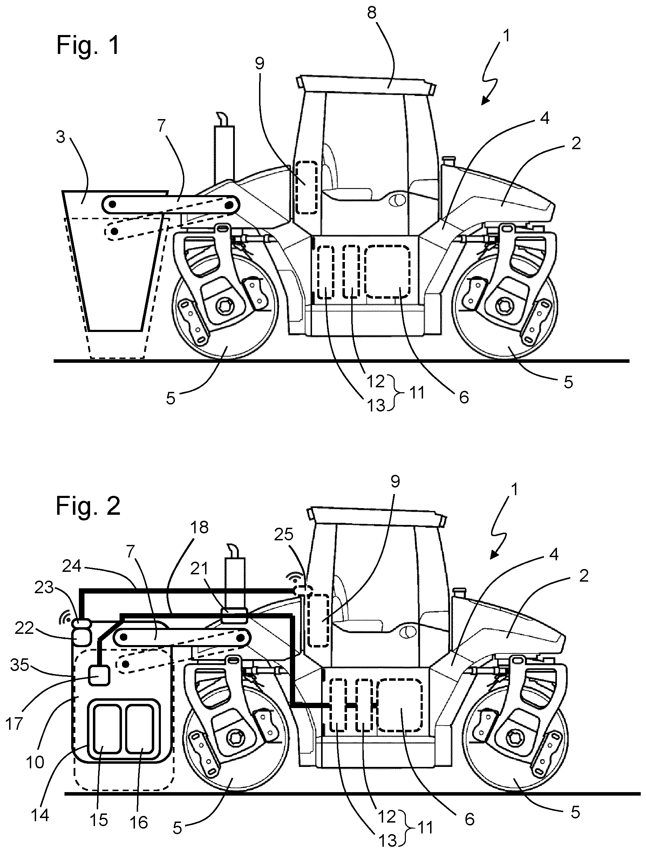

Fig. 1 zeigt eine Baumaschine 1 mit einer Hauptmaschine 2 und einem von der Hauptmaschine 2 mitgeführten Bodenbearbeitungsaggregat 3, beispielsweise einem Splittstreuer. Die Hauptmaschine 2 kann einen Maschinenrahmen 4, Fahreinrichtungen 5 und ein Primärantriebsaggregat 6 aufweisen. Der Maschinenrahmen 4 kann eine wesentliche Tragstruktur der Hauptmaschine 2 bilden und beispielsweise einstückig, wie in den Ausführungsbeispielen gemäß den Figuren 1 und 2, oder auch als knickgelenkter Maschinenrahmen zweistückig mit einem Vorderrahmen und einem mit diesem über eine Knickgelenkeinrichtung verbundenen Hinterrahmen ausgebildet sein. Bei den Fahreinrichtungen 5 kann es sich um Räder und/oder Kettenlaufwerke, insbesondere aber um Walzbandagen handeln, wie in den Figuren 1 und 2 exemplarisch gezeigt. Die Hauptmaschine 2 kann ganz besonders als selbstfahrende Tandemwalze ausgebildet sein.

Bei dem von der Hauptmaschine 2 umfassten Primärantriebsaggregat 6 kann es sich beispielsweise um einen Verbrennungsmotor, insbesondere einen Dieselverbrennungsmotor, handeln. Das Primärantriebsaggregat 6 kann derart ausgebildet sein, dass es die für den Betrieb der Hauptmaschine 2 erforderliche Antriebsenergie, beispielsweise für den Fahrantrieb und den Antrieb von einer oder mehreren Zusatzeinrichtungen, wie beispielsweise von einem oder mehreren Schwingungserregern etc., erzeugen kann. Die Hauptmaschine 2 stellt für sich und insbesondere auch ohne das Bodenbearbeitungsaggregat 3 eine vollfunktionsfähige, insbesondere selbstfahrende, Arbeitsmaschine dar.

Das Bodenbearbeitungsaggregat 3 kann über eine Aufnahmeeinrichtung 7 an der Hauptmaschine 2 gelagert sein. Die Aufnahmeeinrichtung 7 kann zwischen einer Aufnahmeposition (in den Figuren 1 und 2 gestrichelt dargestellt) und einer Betriebsposition (in den Figuren 1 und 2 mit durchgezogener Linie dargestellt) verstellbar sein. Es ist möglich, das Bodenbearbeitungsaggregat 3 über die Aufnahmeeinrichtung 7 an die Hauptmaschine 2 anzuhängen. Zwischen der Aufnahmeeinrichtung 7 und dem Bodenbearbeitungsaggregat können eine oder mehrere miteinander wechselwirkende Formschlusseinrichtungen vorhanden sein. In der Aufnahmeposition kann die Hauptmaschine 2 somit das auf beispielsweise dem Bodenuntergrund aufstehende Bodenbearbeitungsaggregat 3 aus eigenem Antrieb aufnehmen, durch eine Verstellung in die Betriebsposition anheben und in der Betriebsposition mit sich mitführen. In der gestrichelten Darstellung ist das Bodenbearbeitungsaggregat 3 auf dem Bodenuntergrund abgestellt und in der mit durchgezogener Linie angegebenen Darstellung derart angehoben, dass es von der Hauptmaschine 2 mitgeführt werden kann.

Weitere Elemente der Hauptmaschine 2 können ein, insbesondere als Fahrstand oder Fahrerkabine 8 ausgebildeter, Bedienarbeitsplatz und eine Steuereinheit 9, insbesondere Maschinensteuereinheit, sein. Die Steuereinheit 9 kann beispielsweise Bedieneingaben eines Bedieners und/oder von einem oder mehreren Sensoren empfangen und Steuervorgaben an ein oder mehrere Motor- und/oder Pumpenaggregate sowie an das Primärantriebsaggregat 6 übermitteln. Die Hauptmaschine 2 kann ferner ein Hydrauliksystem 11 mit einem ersten Hydraulikkreislauf 12 und einem zweiten Hydraulikkreislauf 13 umfassen. Der erste Hydraulikkreislauf 12 kann beispielsweise ein Fahrantriebshydraulikkreislauf sein. Der zweite Hydraulikkreislauf 13 kann beispielsweise ein Arbeitsmittelhydraulikkreislauf, insbesondere ein Schwingungserregerantriebshydraulikkreislauf, sein. Es können auch noch weitere Hydraulikkreisläufe von der Hauptmaschine 2 umfasst sein. Jedem der beiden Hydraulikkreisläufe ist eine in der Fig. 1 nicht näher gezeigte Hydraulikpumpe zugeordnet, die von dem Primärantriebsaggregat direkt oder indirekt angetrieben wird bzw. antreibbar ist.

Ausgehend von der Baumaschine 1 in der Fig. 1 ist es beispielsweise möglich, dass die Hauptmaschine 2 das Bodenbearbeitungsaggregat 3 absetzt (gestrichelt) und von diesem getrennt wird. An der dadurch freigewordenen Aufnahmestelle an der Aufnahmeeinrichtung 7 kann sie nun anstelle des Bodenbearbeitungsgerätes 3 ein Anbauantriebsmodul 10 aufnehmen. Insbesondere kann es vorgesehen sein, dass die Hauptmaschine 2 das auf dem Boden aufstehende Antriebsanbaumodul 10 mit in der Aufnahmeposition befindlicher Aufnahmeeinrichtung 7 selbst durch eine Verstellung in die Betriebsposition anhebt und anschließend das Anbauantriebsmodul 10 mitführt. Die Gesamtheit aus Anbauantriebsmodul 10 und Hauptmaschine 2 wird vorliegend als "Baumaschine 1" bezeichnet, wobei es sich vom Funktions- und Einsatzspektrum her auch bereits bei der Hauptmaschine 2 allein um eine voll funktionsfähige Baumaschine handelt. Ergänzend oder alternativ muss das Anbauantriebsmodul 10 offensichtlich nicht an einer Stelle an der Hauptmaschine 1 angeordnet werden, an der vormals ein Bodenbearbeitungsaggregat oder ähnliches angeordnet war. Es kann dazu auch eine separate bzw. eigenständige Befestigungsstelle vorgesehen sein.

Fig. 2 veranschaulicht eine Baumaschine 1 umfassend die Hauptmaschine 2 sowie das Anbauantriebsmodul 10. Das Anbauantriebsmodul 10 kann über die Aufnahmeeinrichtung 7 mit der Hauptmaschine 2 verbunden sein. In der gestrichelten Darstellung ist das Anbauantriebsmodul 10 auf dem Bodenuntergrund abgestellt und in der mit durchgezogener Linie angegebenen Darstellung derart angehoben, dass es von der Hauptmaschine 2 mitgeführt werden kann.

Das Anbauantriebsmodul 10 kann ein Sekundärantriebsaggregat 14 umfassen. Dieses kann beispielsweise einen Elektromotor 15 sowie einen elektrischen Energiespeicher 16 aufweisen. Teil des Anbauantriebsaggregates 10 kann ferner eine nachstehend noch näher beschriebene Anbaumodulhydraulikpumpe 17 sein. Teil des Anbauantriebsmoduls 10 kann ferner ein Tragrahmen 35 sein, der die Tragstruktur des Anbauantriebsmoduls 10, insbesondere unabhängig vom Maschinenrahmen 4 der Hauptmaschine 2, bilden kann. Mithilfe der Anbaumodulhydraulikpumpe 17 des Anbauantriebsmoduls 10 kann Hydraulikfluid zu Antriebszwecken in einem nachstehend noch näher beschriebenen Hybridhydraulikkreislauf, der sich durch das Anbauantriebsmoduls und die Hauptmaschine erstreckt, gefördert werden. Es kann auf diese Weise somit anstelle durch vom Primärantriebsaggregat 6 erzeugter Antriebsenergie durch das Sekundärantriebsaggregat 14 erzeugte Antriebsenergie zu Antriebszwecken des ersten und/oder zweiten Hydraulikkreislaufes und zumindest Teilen davon erzeugt und genutzt werden. Dazu kann eine Leitungseinrichtung 18 zwischen dem Anbauantriebsmodul 10 und der Hauptmaschine 2 mit einer nachstehend noch näher beschriebenen ersten Leitungsverbindung 19 und einer zweiten Leitungsverbindung 20 vorgesehen sein. Da es sich bei dem Anbauantriebsmodul 10 um ein zum An- und Abbau von der Hauptmaschine 2 vorgesehenes Modul handelt, kann in der Leitungseinrichtung 18 eine hydraulische Verbindungsschnittstelle 21 vorgesehen sein bzw. der Hybridhydraulikkreislauf sich durch die hydraulische Verbindungsschnittstelle 21 erstrecken. Die hydraulische Verbindungsschnittstelle 21 stellt in diesem Fall somit eine Trennstelle im Hybridhydraulikkreislauf dar, an der der Hybridhydraulikkreislauf getrennt wird, wenn das Anbauantriebsmodul 10 von der Hauptmaschine 2 entfernt wird, bzw. an der der Hybridhydraulikkreislauf zwischen der Hauptmaschine 2 und dem Anbauantriebsmodul geschlossen wird, wenn das Anbauantriebsmodul 10 an die Hauptmaschine 2 angeschlossen wird.

Es kann ferner vorgesehen sein, dass das Anbauantriebsmodul 10 eine Modulsteuereinheit 22 umfasst. Die Modulsteuereinheit 22 kann zur Steuerung einer oder mehrerer der Komponenten des Anbauantriebsmoduls 10 ausgebildet sein, insbesondere des Elektromotors 15 und/oder des elektrischen Energiespeichers 16 und/oder des Sekundärantriebsaggregates 14 und/oder der Anbaumodulhydraulikpumpe 17. Das Anbauantriebsmodul 10 kann eine Kommunikationseinrichtung 23 umfassen, die über eine Signalübertragungsverbindung 24 in Kommunikationsverbindung mit einer Kommunikationseinrichtung 25 der Hauptmaschine 2 steht. Die Signalübertragungsverbindung 24 kann kabelgebunden und/oder kabellos sein. Mithilfe der Signalübertragungsverbindung 24 können somit beispielsweise Steuer- und/oder Sensordaten zwischen der Hauptmaschine 2 und dem Anbauantriebsmodul 10 ausgetauscht werden.

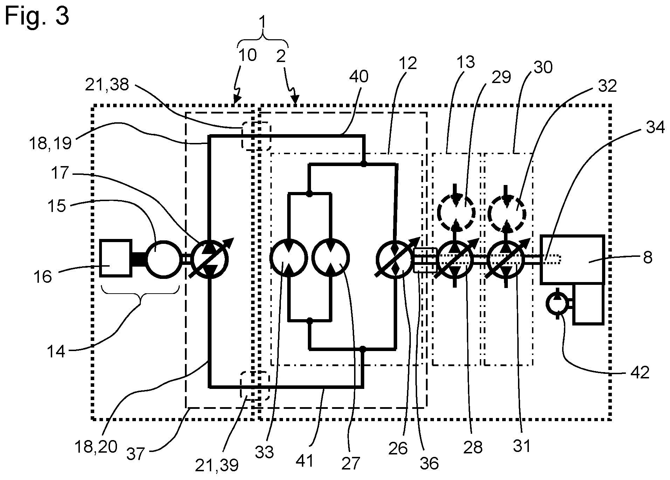

Fig. 3 offenbart weitere Einzelheiten zu einem möglichen Aufbau des Hydrauliksystems der Baumaschine 1, insbesondere der Baumaschine 1 der Fig. 2. Der erste Hydraulikkreislauf 12 umfasst eine erste Hydraulikpumpe 26 und einen ersten Hydraulikmotor 27. Der zweite Hydraulikkreislauf 13 umfasst eine zweite Hydraulikpumpe 28 (bzw. wenigstens eine Hydraulikpumpe) und einen zweiten Hydraulikmotor 29 (bzw. wenigstens einen Hydraulikmotor).

Es ist möglich, dass die Hauptmaschine 2 über den ersten Hydraulikkreislauf 12 und den zweiten Hydraulikkreislauf 13 hinaus noch einen oder mehrere weitere Hydraulikkreisläufe 30 umfasst, die jeweils eine oder mehrere Hydraulikpumpen 31 und/oder Hydraulikmotoren 32 aufweisen können.

Von dem zweiten Hydraulikkreislauf 13 und dem wenigstens einen weiteren Hydraulikkreislauf 30 sind aus Übersichtlichkeitsgründen in der Fig. 3 (und auch in den nachfolgenden Figuren) nur Teile dargestellt, konkret die jeweilige Pumpe und der jeweilige Motor. Diese können beispielsweise gleich oder ähnlich zum ersten Hydraulikkreislauf 12 ausgebildet sein. Diese können als offene und/oder geschlossene Hydraulikkreisläufe ausgebildet sein.

Ergänzend oder alternativ kann es ferner vorgesehen sein, dass pro Hydraulikkreislauf zwei oder mehr Hydraulikmotoren umfasst sind, insbesondere in einer Parallelverschaltung zueinander. So ist es für den ersten Hydraulikkreislauf gemäß Fig. 3 beispielsweise möglich, dass dieser neben dem ersten Hydraulikmotor 27 noch einen weiteren Hydraulikmotor 33 aufweist.

Die Hauptmaschine 2 kann einen vom Primärantriebsaggregat 8 ausgehenden Primärantriebsstrang 34 aufweisen, beispielsweise eine als Abtrieb des Primärantriebsaggregates 8 ausgebildete Abtriebswelle, insbesondere Zapfwelle, über den ein Antrieb einer oder mehrerer der Hydraulikpumpen 26, 28 und/oder 31 möglich ist. Insbesondere kann es vorgesehen sein, dass zumindest die erste Hydraulikpumpe 26 und die zweite Hydraulikpumpe 28 über eine Kopplungseinrichtung 36 miteinander, insbesondere direkt mechanisch, beispielsweise über eine Verbindungsantriebswelle, einen Wellendurchtrieb oder ähnliches, antriebsverbunden sind. Antriebsverbunden bedeutet, dass die eine Hydraulikpumpe, insbesondere direkt mechanisch, Antriebsenergie auf die andere Hydraulikpumpe übertragen kann und umgekehrt. Dies kann beispielsweise durch eine Tandemanordnung der ersten Hydraulikpumpe 26 und der zweiten Hydraulikpumpe 28 erreicht werden. Es können zudem ein oder mehrere weitere Hydraulikpumpen 31 vorgesehen sein, die ebenfalls in einer direkten Antriebsverbindung mit der ersten und/oder der zweiten Hydraulikpumpe 26/28 stehen. Es ist möglich, dass die ersten Hydraulikpumpe 26 und/oder die zweite Hydraulikpumpe 28 und/oder die eine oder die mehreren weiteren Hydraulikpumpen 31 direkt mechanisch über den Primärantriebsstrang angetrieben werden bzw. mit diesem antriebsverbunden sind, wenn die erste Hydraulikpumpe 26, die zweite Hydraulikpumpe 28 und/oder die eine oder die mehreren weiteren Hydraulikpumpen 31 vom Primärantriebsaggregat der Hauptmaschine 2 angetrieben werden.

Das in der Fig. 3 gezeigte Antriebssystem ermöglicht allerdings auch einen Antrieb zumindest eines Teils des ersten Hydraulikkreislaufes 12 durch das Sekundärantriebsaggregat 14 des Anbauantriebsmoduls 10, ganz besonders unabhängig vom dem Primärantriebsaggregat 8. Dazu kann ein Hybridhydraulikkreislauf 37 von der Baumaschine 1 umfasst sein und sich sowohl über das Anbauantriebsmodul 10 als auch über die Hauptmaschine 2 der Baumaschine 1 erstrecken. Im Gegensatz zu dem Antrieb der Hydraulikkreisläufe 12, 13 und/oder 30 über das Primärantriebsaggregat, bei dem Hydraulikfluid insbesondere ausschließlich auf Seiten der Hauptmaschine 2 bewegt wird, erfolgt bei einem Antrieb der Hydraulikkreisläufe 12, 13 und/oder 30, insbesondere des ersten Hydraulikkreislaufes 12, über das Sekundärantriebsaggregat ein Austausch von Hydraulikfluid zwischen dem Anbauantriebsmodul 20 und der Hauptmaschine 2.

In dem in Fig. 3 angegebenen Ausführungsbeispiel kann es dazu vorgesehen sein, dass die Anbaumodulhydraulikpumpe 17 des Anbauantriebsmoduls 10 über die erste Leitungsverbindung 19 der Leitungseinrichtung 18 und die zweite Leitungsverbindung 20 der Leitungseinrichtung 18 fluidleitend mit dem ersten Hydraulikkreislauf 12 verbunden ist. Dazu können sich die Leitungsverbindungen 19 und 20 durch die hydraulische Verbindungsschnittstelle 21 hindurch erstrecken und beispielsweise einen Zulaufanschluss 38 und einen Rücklaufanschluss 39 aufweisen. Innerhalb der Hauptmaschine 2 kann eine Zulaufleitung 40 vorhanden sein, die den ersten Hydraulikkreislauf 12 über eine geeignete Einspeisestelle, beispielsweise in Form eines in den Figuren nicht näher gezeigten Ventils, mit dem Zulaufanschluss 38 verbindet. Es kann ferner eine Rücklaufleitung 41 vorhanden sein, die den ersten Hydraulikkreislauf 12 mit dem Rücklaufanschluss 39 verbindet. Die Bezeichnungen "Zulauf" und "Rücklauf" bezeichnen die Bewegungsrichtung des Hydraulikfluids von der Hauptmaschine 2 zum Anbauantriebsmodul 10 hin oder von diesem weg. Es versteht sich, dass diese Richtungen im Betrieb der Baumaschine 1 offensichtlich auch wechseln können.

Mithilfe des Hybridhydraulikkreislaufes 37 ist es möglich, vom Sekundärantriebsaggregat 16 über die Anbaumodulhydraulikpumpe 17 gefördertes Fluid zum Antrieb eines oder mehrerer der Hydraulikmotoren 27 und/oder 33 des ersten Hydraulikkreislaufes auf Seiten der Hauptmaschine 2 zu nutzen. Es kann weiter ergänzend oder alternativ möglich sein, darüber auch die, insbesondere wie nachstehend noch näher beschrieben, als Motor-Pumpe-Einheit ausgebildete erste Hydraulikpumpe 26 über das von der Anbaumodulhydraulikpumpe 17 geförderte Fluid anzutreiben und dadurch indirekt über die Kopplungseinrichtung 36 auch die zweite Hydraulikpumpe 28 des zweiten Hydraulikkreislaufes 13 und/oder die Hydraulikpumpen 31 des oder der weiteren Hydraulikkreisläufe 30 unter Nutzung des Sekundärantriebsaggregates 16 als primäre Antriebsquelle anzutreiben. Dies wird in den nachfolgenden Figuren noch näher erläutert werden.

Teil der Hauptmaschine 2 kann ferner ein über beispielsweise einen Nebenabtrieb des Primärantriebsaggregates 8 angetriebener Nebenverbraucher 42 sein, wie beispielsweise eine Speisepumpe und/oder ähnliches. Eine solche Speisepumpe kann beispielsweise dazu vorgesehen sein, Hydraulikfluid in einen oder mehrere geschlossene Hydraulikkreisläufe einzuspeisen, insbesondere zum Ausgleich von Leckageverlusten und/oder zu Kühlzwecken, was in der Fig. 3 aus Übersichtlichkeitsgründen allerdings nicht gezeigt ist.

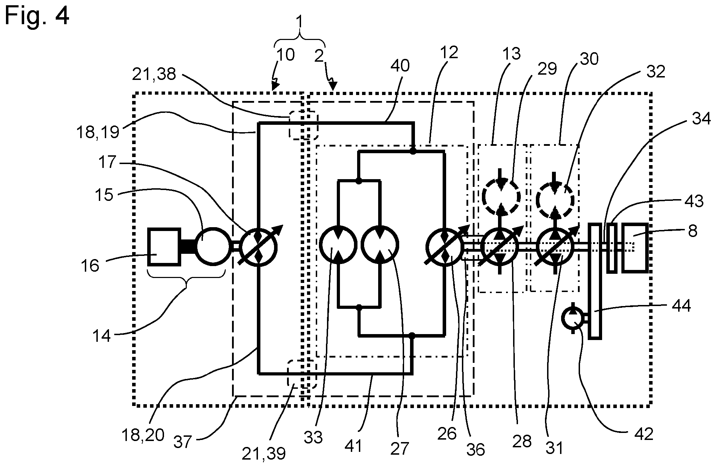

Fig. 4 veranschaulicht in einer im Vergleich zu Fig. 3 alternativen Ausführungsform weitere Einzelheiten zu einem möglichen Aufbau des Hydrauliksystems der Baumaschine 1, insbesondere der Baumaschine 1 der Fig. 2, wobei nachstehend im Wesentlichen auf die bestehenden Unterschiede eingegangen wird und im Übrigen auf die Ausführungen zum Ausführungsbeispiel gemäß der Fig. 3 Bezug genommen wird.

Unterschiede bestehen in der Ausbildung des Primärantriebsstranges 34. Dieser kann eine Kupplungseinrichtung 43 sowie eine Verteilereinrichtung 44, beispielsweise in Form eines Pumpenverteilergetriebes, aufweisen.

Bei der Kupplungseinrichtung 43 kann es sich insbesondere um eine Schaltkupplung handeln. Diese kann zwischen einer drehmomentübertragenden Position und einer kein Drehmoment übertragenden Schaltstellung verstellt werden und innerhalb des Primärantriebsstranges angeordnet sein. Es können auch mehrere derartiger Kupplungseinrichtungen 43, insbesondere in Form einer oder mehrerer Schaltkupplungen, von der Hauptmaschine 2, insbesondere vom Primärantriebsstrang 34, umfasst sein. Ideal kann es sein, wenn die Kupplungseinrichtung 43 als Primärantriebskupplung ausgebildet ist. Eine Primärantriebskupplung bezeichnet in Bezug auf den Kraftfluss eine Kupplungseinrichtung 43, die abtriebsseitig zum Primärantriebsaggregat 6 dieses von dem Primärantriebsstrang 34 von insbesondere der ersten Hydraulikpumpe 26 und der zweiten Hydraulikpumpe 28 und/oder einer oder mehrerer weiterer Hydraulikpumpen 31, ganz besonders aller Hydraulikpumpen, der Hauptmaschine 2 abkuppelt. Dadurch ist es möglich, dass die Fahr- und Arbeitskomponenten der Hauptmaschine 2 bei einem Antrieb der Baumaschine 1 durch das Sekundärantriebsaggregat 14 zwar einerseits vollständig angetrieben werden und damit der Funktionsumfang der Hauptmaschine 2 vollständig aufrechterhalten werden kann. Andererseits muss dabei das Primärantriebsaggregat 6 nicht mitgeschleppt werden, wenn es gegenüber dem weiteren Primärantriebsstrang 34 entkuppelt ist.

Bei der Verteilereinrichtung 44 kann es sich beispielsweise um ein Pumpenverteilergetriebe handeln, an das gleichzeitig mehrere Hydraulikpumpen, wie beispielsweise die Nebenverbraucherpumpe 42, angeschlossen sind. Es können auch die weiteren vorstehend angeführten Hydraulikpumpen, beispielsweise die erste Hydraulikpumpe 26, die zweite Hydraulikpumpe 28 und/oder die eine oder die mehreren weiteren Hydraulikpumpen 31, an die Verteilereinrichtung 33 angeschlossen sein.

Sowohl der erste Hydraulikkreislauf 12 als auch der zweite Hydraulikkreislauf 13 sowie ergänzend oder alternativ der Hybridhydraulikkreislauf können insbesondere als geschlossene Hydraulikkreisläufe ausgebildet sein.

Insbesondere die erste Hydraulikpumpe 26 und/oder die zweite Hydraulikpumpe 28 und/oder die Anbaumodulhydraulikpumpe 17 und/oder die eine oder die mehreren weiteren Hydraulikpumpen 31 können als Pumpe-Motor-Einheit ausgebildet sein und somit sowohl als Hydraulikpumpe als auch als Hydraulikmotor betrieben werden. In den Figuren 3 und 4 ist dies beispielhaft für die erste Hydraulikpumpe 26 und die Anbaumodulhydraulikpumpe 17 gezeigt. Ein Betrieb der Anbaumodulhydraulikpumpe 17 als Förderpumpe ermöglicht entsprechend eine durch den Elektromotor 15 angetriebene und damit praktisch emissionsfreie Förderung von Hydraulikfluid zur Hauptmaschine 2 in den ersten Hydraulikkreislauf 12 (oder zumindest Teilen davon) zu Antriebswecken der Hauptmaschine 2. Ein Betrieb der Anbaumodulhydraulikpumpe 17 als Hydraulikmotor ermöglicht dagegen ein Antreiben des Elektromotors 15 über den Hybridhydraulikkreislauf 37 und damit die Nutzung des Elektromotors 15 als Generator zum Aufladen des elektrischen Energiespeichers 16. Die Nutzung der ersten Hydraulikpumpe 26 als Förderpumpe ermöglicht einen Antrieb des ersten Hydraulikmotors 27 und/oder des oder der weiteren Hydraulikmotoren 33 im ersten Hydraulikkreislauf über das Primärantriebsaggregat 8. Die Nutzung der ersten Hydraulikpumpe 26 als Hydraulikmotor ermöglicht dagegen einen Antrieb auch der zweiten Hydraulikpumpe 28 (und/oder der weiteren Hydraulikpumpen 31) über das Sekundärantriebsaggregat 14 durch die bestehende Kopplung der ersten Hydraulikpumpe 26 mit der zweiten Hydraulikpumpe 28 über die Kopplungseinrichtung 36 (und/oder einer entsprechenden Kopplung zu der oder den weiteren Hydraulikpumpen). Der ersten Hydraulikpumpe 26 kann ferner ergänzend oder alternativ auch eine Sperrfunktion innerhalb des ersten Hydraulikkreislaufes zukommen, wodurch sie einen oder mehrere Leitungsabschnitte des ersten Hydraulikkreislaufes 12 für einen Durchlauf von Hydraulikfluid sperrt.

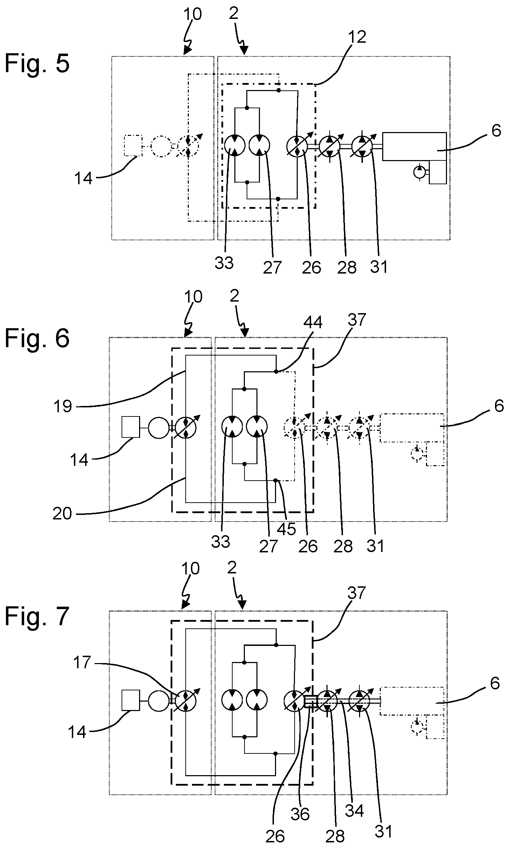

Die Figuren 5 bis 8 veranschaulichen verschiedene mögliche Betriebszustände beispielhaft anhand des in der Fig. 3 bereits beschriebenen Aufbaus.

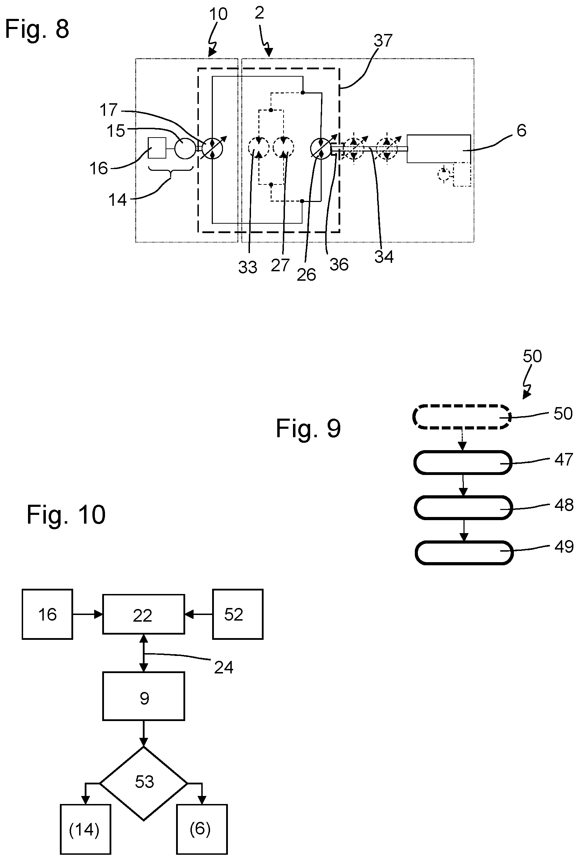

Fig. 5 betrifft dabei einen konventionellen Antrieb der Hauptmaschine 2 über das Primärantriebsaggregat, Fig. 6 einen Antrieb von im ersten Hydraulikkreislauf angeordneten Hydraulikmotoren über das Sekundärantriebsaggregat, Fig. 7 einen Antrieb des ersten und des zweiten Hydraulikkreislaufes über das Sekundärantriebsaggregat und Fig. 8 einen Generatorbetrieb.

In den Figuren 5 bis 8 sind aus Übersichtlichkeitsgründen nicht sämtliche der in den Figuren 3 und 4 bezeichneten Komponenten separat bezeichnet und einige in den Figuren 3 und 4 enthaltene Details nicht gezeigt.

Im konventionellen Betrieb, wie in der Fig. 5 veranschaulicht, treibt das Primärantriebsaggregat 6 der Hauptmaschine 2 über den Primärantriebsstrang die einzelnen Hydraulikpumpen 26, 28 und 31 (und ggf. weiterer, wie beispielsweise 42 aus den Figuren 3 und 4) an. Das Anbauantriebsmodul 10 wird hierfür weder benötigt noch muss es für den Betrieb der Hauptmaschine 2 in diesem Betriebszustand überhaupt von der Hauptmaschine 2 mitgeführt werden. Die erste Hydraulikpumpe 26 wirkt im ersten Hydraulikkreislauf 12 als angetriebene Förderpumpe.

In den Betriebszuständen gemäß den Figuren 6 und 7 erfolgt die Bereitstellung der Antriebsenergie zum Betrieb von einem oder mehreren der Hydraulikmotoren der Hauptmaschine 2 dagegen nicht mehr vom Primärantriebsaggregat 6, sondern vom Sekundärantriebsaggregat 14, das an die Hauptmaschine 2 wie vorstehend beschrieben angeschlossen werden kann.

In Fig. 6 ist der erste Hydraulikkreislauf 12 teilweise in den Hybridhydraulikkreislauf 37 integriert. Die erste Hydraulikpumpe 26, die beispielsweise als hinsichtlich ihres Schluckvolumens verstellbare Motor-Pumpe-Einheit ausgebildet sein kann, ist beispielhaft in eine Sperr- bzw. Nullstellung verstellt, beispielsweise durch die Steuereinheit 9 der Hauptmaschine 2 oder die Modulsteuereinheit 22. In dem zwischen den beiden Anschlussstellen 45 (Zulaufanschluss) und 46 (Rücklaufanschluss) des ersten Hydraulikkreislaufes 12 liegenden und sich durch die erste Hydraulikpumpe 26 erstreckenden Leitungsbereich wird in diesem Fall somit kein Hydraulikfluid gefördert bzw. die erste Hydraulikpumpe 26 wirkt in diesem Fall als Sperrventil in diesem Leitungsbereich. Allerdings wird von der Anbaumodulhydraulikpumpe 17 bereitgestellte hydraulische Energie zum Antrieb des ersten Hydraulikmotors und/oder des wenigstens einen weiteren Hydraulikmotors 33 genutzt. Diese können im ersten Hydraulikkreislauf parallel zueinander angeordnet bzw. hydraulisch geschaltet sein. Der Hybridhydraulikkreislauf 37 kann derart ausgebildet sein bzw. der Anschluss der ersten Leitungsverbindung 19 und der zweiten Leitungsverbindung 20 an den ersten Hydraulikkreislauf 12 kann derart erfolgen, dass die Gesamtheit der Hydraulikmotoren 27 und 33 des ersten Hydraulikkreislaufes parallel im Hybridhydraulikkreislauf 37 zur ersten Hydraulikpumpe 26 angeordnet ist. Handelt es sich bei dem ersten Hydraulikkreislauf 12 somit um einen Fahrantriebshydraulikkreislauf und bei dem ersten Hydraulikmotor 27 und dem wenigstens einen weiteren Hydraulikmotor 33 um Fahrantriebshydraulikmotoren, kann somit im Betriebszustand gemäß der Fig. 6 ein Fahrbetrieb der Baumaschine 1 unter Umgehung des Primärantriebsaggregates 6 und allein aus über das Sekundärantriebsaggregat 14 des Anbauantriebmoduls 10 zur Verfügung gestellte Antriebsenergie erreicht werden.

In der Fig. 7 wird ein gegenüber der Fig. 6 erweiterter Antriebszustand veranschaulicht, in dem ergänzend zu den Hydraulikmotoren des ersten Hydraulikkreislaufes nun auch weitere Hydraulikmotoren weiterer Hydraulikkreisläufe ursächlich durch das Sekundärantriebsaggregat 14 angetrieben werden. Das Primärantriebsaggregat wird nach wie vor nicht genutzt. In diesem Fall wirkt die erste Hydraulikpumpe 26 im Hybridhydraulikkreislauf 37 als Hydraulikmotor. Der Antrieb erfolgt über von der Anbaumodulhydraulikpumpe 17 gefördertes Hydraulikfluid. Über die Kopplungseinrichtung 36 treibt die Hydraulikpumpe 26, insbesondere mechanisch, ganz besonders direkt mechanisch, beispielsweise über einen Teil des Primärantriebsstranges 34 oder den Primärantriebsstrang 34 an sich die zweite Hydraulikpumpe 28 und/oder wenigstens die eine und/oder weitere Hydraulikpumpen 28 an. Das Primärantriebsaggregat 6 kann beispielsweise über eine Kupplungseinrichtung 43, wie in der Fig. 4 gezeigt, vom Primärantriebsstrang 34 abgekuppelt sein, so dass das Primärantriebsaggregat nicht mitgeschleppt werden muss. In diesem Betriebszustand ist die Baumaschine 1 somit gegenüber der Hauptmaschine 2 voll funktionsfähig. Über den zweiten Hydraulikkreislauf bzw. die zweite Hydraulikpumpe 28 des zweiten Hydraulikkreislaufes und/oder über eine der weiteren Hydraulikpumpen 31 in einem oder mehreren weiteren Hydraulikkreisläufen 30 angetriebene Verbraucher können auf diese Weise über das Sekundärantriebsaggregat 14 des Anbauantriebsmoduls 10 angetrieben werden, ohne dass dazu nennenswerte Umbau- oder Anpassungsmaßnahmen in/an der Hauptmaschine 2 erforderlich sind.

Fig. 8 schließlich veranschaulicht einen Generatorbetriebszustand der Baumaschine 1. Dieser kann beispielsweise dazu genutzt werden, um den elektrischen Energiespeicher 16 durch einen Betrieb des Elektromotors 15 als Generator aufzuladen. Das Primärantriebsaggregat 6 treibt in diesem Fall über den Primärantriebsstrang 34 die erste Hydraulikpumpe 26 an. Diese wirkt in diesem Fall wieder als Förderpumpe, allerdings im Hybridhydraulikkreislauf 37. Es kann vorgesehen sein, dass der erste Hydraulikmotor 27 und/oder der oder die wenigstens weiteren Hydraulikmotoren 33 des ersten Hydraulikkreislaufes in diesem Fall auf eine Nullstellung verstellt werden, so dass sie nicht von Hydraulikfluid passiert werden. Ergänzend oder alternativ kann es vorgesehen sein, dass der erste Hydraulikmotor 27 und/oder der oder die wenigstens weiteren Hydraulikmotoren 33 des ersten Hydraulikkreislaufes mithilfe einer Feststellbremse in einer Position arretierbar sind und festgestellt werden können. Es ist weiter ergänzend oder alternativ auch möglich, dass die weiteren Hydraulikkreisläufe, wie beispielsweise der zweite Hydraulikkreislauf mit der zweiten Hydraulikpumpe 28 und/oder einer oder mehrere der weiteren Hydraulikkreisläufe mit einer oder mehreren der weiteren Hydraulikpumpen 31 von dem Primärantriebsstrang 34 abgekuppelt sind oder, im Fall von Verstellhydraulikpumpen, auf eine Stellung verstellt werden, in der sei kein Hydraulikfluid in dem jeweiligen Hydraulikkreislauf fördern.

Fig. 9 veranschaulicht Schritte eines Verfahrens 51 zum Umrüsten einer Baumaschine 2 bzw. einer Hauptmaschine 2 zu einer Baumaschine 1 mit einem Anbauantriebsmodul 10, insbesondere wie in den vorhergehenden Figuren gezeigt. Die Hauptmaschine 2 kann dazu ein Primärantriebsaggregat 6 und ein Hydrauliksystem 11 mit einem ersten Hydraulikkreislauf 12 mit einer ersten Hydraulikpumpe 26 und einem ersten Hydraulikmotor 27 und mit einem zweiten Hydraulikkreislauf 13 mit einer zweiten Hydraulikpumpe 28 und mit einem zweiten Hydraulikmotor 29 aufweisen, wobei die erste Hydraulikpumpe 26 und die zweite Hydraulikpumpe 28 miteinander über die Kopplungseinrichtung 36 antriebsverbunden sind und zusammen über einen Primärantriebsstrang 34 vom Primärantriebsaggregat 6 antreibbar sind.

Hiervon ausgehend kann es in einem Schritt a) vorgesehen sein, dass ein Aufnehmen 47 des Anbauantriebsmoduls 10 durch die Hauptmaschine 2 erfolgt. Ferner kann in einem Schritt b) ein Herstellen 48 fluidleitender Verbindungen 18, 19 zwischen dem Anbauantriebsmodul 10 und der Hauptmaschine 2 derart erfolgen, dass ein sich wenigstens teilweise durch die Anbaumodulhydraulikpumpe 17 des Anbauantriebsmoduls 10 und den ersten Hydraulikfluidkreislauf 12 erstreckender und die erste Hydraulikpumpe 26 und/oder den ersten Hydraulikmotor 27 antreibender Hybridhydraulikkreislauf 37 erhalten wird. In einem Schritt c) erfolgt dann ein Antreiben 49 der Anbaumodulhydraulikpumpe 17 durch ein vom Anbauantriebsmodul 10 umfasstes Sekundärantriebsaggregat 14 und dadurch ein Fördern von Hydraulikfluid im Hybridhydraulikkreislauf 37 zum Antreiben der ersten Hydraulikpumpe 26 und/oder des ersten Hydraulikmotors 27. Die Reihenfolge dieser Schritte kann variieren. Insbesondere ist es auch möglich, dass die Schritte a) und b) in umgekehrter Reihenfolge verlaufen. Dies kann insbesondere dann sinnvoll sein, wenn eine Hebeeinrichtung von dem Anbauantriebsmodul 10 umfasst ist, die die Relativlage des Anbaubetriebsmodus 10 relativ zur Hauptmaschine 2 zwischen einer Aufnahmeposition und einer Betriebsposition verstellt, wie nachstehend noch weiter erläutert.

Das Aufnehmen 47 des Anbauantriebsmoduls kann mithilfe einer zwischen einer Aufnahmeposition und einer Betriebsposition verstellbaren Aufnahmeeinrichtung erfolgen, wie vorstehend bereits näher beschrieben, wobei hierzu zunächst ein Verstellen der Aufnahmeeinrichtung in die Aufnahmeposition zur Aufnahme des Anbauantriebsmoduls und anschließend in die Betriebsposition zusammen mit dem Anbauantriebsmodul erfolgen kann, wobei das Verstellen aus der Aufnahmeposition in die Betriebsposition insbesondere ein Heben und/oder Hochschwenken des Anbauantriebsmoduls umfassen kann.

Das Verfahren kann den Schritten 47 bis 49 vorgelagert ein Entfernen 50 eines Bodenbearbeitungsaggregates 3 umfassen. Es ist dann möglich, dass das Aufnehmen 47 des Anbauantriebsmoduls 10 an genau derselben Stelle und über dieselben Lagereinrichtungen erfolgen, an denen vormals das Bodenbearbeitungsaggregat gelagert war.

Die Hauptmaschine 2 und das Anbauantriebsaggregat 10 können jeweils eine Steuereinheit 9, 22 umfassen, die über die Signalübertragungsverbindung 24 miteinander Steuer- und/oder Sensordaten austauschen können, wie es in der Prinzipskizze der Fig. 10 näher veranschaulicht ist, die die Funktionsweise der Steuereinheit 9 näher erläutert. Für die Steuerung der Baumaschine 1, insbesondere auch zur Einleitung des Schrittes 49, kann es vorgesehen sein, dass von der Modulsteuereinheit 22 zunächst ein Abfragen erfolgt, ob überhaupt ein Anschluss zu einer Hauptmaschine 2 vorliegt. Dies kann beispielweise mithilfe eines Anschlusssensors 52 und/oder mithilfe einer Zustandseingabe durch einen Bediener erfolgen. Ferner kann die Modulsteuereinheit 22 beim elektrischen Energiespeicher 16 den aktuellen Ladezustand (state-of-charge) abfragen. Die Modulsteuereinheit 22 steht über die Signalübertragungsleitung 24 in einer Kommunikationsverbindung mit der Steuereinheit 9 der Hauptmaschine 2 und kann dieser beispielsweise die vorstehend ermittelten Daten oder auch nur eine Freigabeinformation übermitteln, dass von Seiten des Anbauantriebsmoduls 10 ein Einsatz desselben möglich wäre. Die finale Entscheidung, ob ein Antrieb der Baumaschine 1 über das Primärantriebsaggregat 6 (in der Fig. 10 ist dieser Zustand mit "(6)" bezeichnet) oder das Sekundärantriebsaggregat 14 (in der Fig. 10 ist dieser Zustand mit "(14)" bezeichnet) erfolgt, kann die Steuereinheit 9 anhand eines definierten Entscheidungskataloges 53 treffen. Die Steuereinheit 9 kann insbesondere auch Steuerbefehle an die als Verstellhydraulikpumpe und/oder Motor-Pumpe-Einheit ausgebildete ersten Hydraulikpumpe 26 und/oder Anbaumodulhydraulikpumpe 17 übermitteln, insbesondere zu deren Betrieb als Pumpe oder als Motor, abhängig vom aktuell vorgegebenen Betriebszustand.

### Bezugszeichenliste:

- 1: Baumaschine
- 2: Hauptmaschine
- 3: Bodenbearbeitungsaggregates
- 4: Maschinenrahmen
- 5: Fahreinrichtungen
- 6: Primärantriebsaggregat
- 7: Aufnahmeeinrichtung
- 8: Fahrerkabine
- 9: Steuereinheit
- 10: Anbauantriebsmodul
- 11: Hydrauliksystem
- 12: erster Hydraulikkreislauf
- 13: zweiter Hydraulikkreislauf
- 14: Sekundärantriebsaggregat
- 15: Elektromotor
- 16: elektrischer Energiespeicher
- 17: Anbaumodulhydraulikpumpe
- 18: Leitungseinrichtung
- 19: erste Leitungsverbindung
- 20: zweite Leitungsverbindung
- 21: hydraulische Verbindungsschnittstelle
- 22: Modulsteuereinheit
- 23: Kommunikationseinrichtung
- 24: Signalübertragungsverbindung
- 25: Kommunikationseinrichtung
- 26: erste Hydraulikpumpe
- 27: erster Hydraulikmotor
- 28: zweite Hydraulikpumpe
- 29: zweiter Hydraulikmotor
- 30: weiterer Hydraulikkreislauf
- 31: Hydraulikpumpe
- 32: Hydraulikmotor
- 33: weiterer Hydraulikmotor
- 34: Primärantriebsstrang
- 35: Tragrahmen
- 36: Kopplungseinrichtung
- 37: Hybridhydraulikkreislauf
- 38: Zulaufanschluss
- 39: Rücklaufanschluss
- 40: Zulaufleitung
- 41: Rücklaufleitung
- 42: Nebenverbraucher
- 43: Kupplungseinrichung, Primärantriebskupplung
- 44: Verteilereinrichtung
- 45: Anschlussstelle
- 46: Anschlussstelle
- 47: Aufnehmen
- 48: Herstellen
- 49: Antreiben
- 50: Entfernen
- 51: Verfahren
- 52: Anschlusssensor
- 53: Entscheidungskatalog

## Patentansprüche

1. Baumaschine (1), insbesondere Tandemwalze, mit
a) einer Hauptmaschine (2), umfassend
einen Maschinenrahmen (4),
- Fahreinrichtungen (5),
- ein Primärantriebsaggregat (6),
- ein Hydrauliksystem (11) mit
- einem ersten Hydraulikkreislauf (12) mit einer ersten Hydraulikpumpe (26) und einem ersten Hydraulikmotor (27)
- einem zweiten Hydraulikkreislauf (13) mit einer zweiten Hydraulikpumpe (28) und mit einem zweiten Hydraulikmotor (29),
wobei die erste Hydraulikpumpe (26) und die zweite Hydraulikpumpe (28) miteinander über eine Kopplungseinrichtung (36) antriebsverbunden sind und zusammen über einen Primärantriebsstrang (34) vom Primärantriebsaggregat (6) antreibbar sind, und
b) einem Anbauantriebsmodul (10), umfassend ein Sekundärantriebsaggregat (14) und eine von dem Sekundärantriebsaggregat (14) angetriebene Anbaumodulhydraulikpumpe (17),
- wobei zwischen der Hauptmaschine (2) und dem Anbauantriebsmodul (10) eine trennbare hydraulische Verbindungsschnittstelle (21) vorhanden ist,
- wobei das Anbauantriebsmodul (10) zum Erhalt eines sich wenigstens teilweise durch die Anbaumodulhydraulikpumpe (17) und den ersten Hydraulikfluidkreislauf erstreckenden und die erste Hydraulikpumpe (26) und/oder den ersten Hydraulikmotor (27) antreibenden Hybridhydraulikkreislaufes (37) über eine die trennbare hydraulische Verbindungsschnittstelle (21) durchlaufende erste Leitungsverbindung (19) und über eine die trennbare hydraulische Verbindungsschnittstelle (21) durchlaufende zweite Leitungsverbindung (20) mit dem ersten Hydraulikkreislauf (12) verbunden ist.

2. Baumaschine (1) gemäß Anspruch 1,
**dadurch gekennzeichnet,**
**dass**
- der erste Hydraulikkreislauf (12) ein, insbesondere geschlossener, Fahrantriebshydraulikkreislauf, die erste Hydraulikpumpe (26) eine Fahrantriebshydraulikpumpe und der erste Hydraulikmotor (27) ein Fahrantriebshydraulikmotor und/oder
- der zweite Hydraulikkreislauf (13) ein, insbesondere geschlossener, Schwingungserregerhydraulikkreislauf, die zweite Hydraulikpumpe (28) eine Schwingungserregerantriebshydraulikpumpe und der zweite Hydraulikmotor (29) ein Schwingungserregerantriebshydraulikmotor
ist.

3. Baumaschine (1) gemäß einem der vorhergehenden Ansprüche,
**dadurch gekennzeichnet,**
**dass** die Kopplungseinrichtung (36) zwischen der ersten Hydraulikpumpe (26) und der zweiten Hydraulikpumpe (28) wenigstens eines der folgenden Merkmale aufweist:
- sie ist als eine direkte mechanische Drehmomentübertragungsverbindung zwischen der ersten (26) und der zweiten (28) Hydraulikpumpe ausgebildet;
- sie ist als ein sich zwischen der ersten (26) und der zweiten (28) Hydraulikpumpe erstreckender Wellendurchtrieb ausgebildet;
- sie umfasst eine Kupplungseinrichtung (43).

4. Baumaschine (1) gemäß einem der vorhergehenden Ansprüche,
**dadurch gekennzeichnet,**
**dass** die Hauptmaschine (2) eine Aufnahmeeinrichtung (7) aufweist, die zur lösbaren Aufnahme eines Bodenbearbeitungsaggregates ausgebildet ist, und dass das Anbauantriebsmodul (10) über die Aufnahmeeinrichtung (7) an der Hauptmaschine (2) der Baumaschine (1) gelagert ist, wobei die Aufnahmeeinrichtung (7) insbesondere zwischen einer Aufnahmeposition und einer Betriebsposition verstellbar, ganz besonders höhenverstellbar, ist.

5. Baumaschine (1) gemäß einem der vorhergehenden Ansprüche,
**dadurch gekennzeichnet,**
**dass** das Sekundärantriebsaggregat (14) einen elektrischen Energiespeicher (16) und einen mit elektrischer Energie aus dem elektrischen Energiespeicher (16) angetriebenen Elektromotor (15) aufweist, der die Anbaumodulhydraulikpumpe (17) antreibt.

6. Baumaschine (1) gemäß einem der vorhergehenden Ansprüche,
**dadurch gekennzeichnet,**
**dass** die trennbare hydraulische Verbindungsschnittstelle (21)
- eine von der Hauptmaschine (2) umfasste Anschlussventileinrichtung aufweist und/oder
- auf Seiten der Hauptmaschine (2) mindestens einen Zulaufanschluss (38) und mindestens einen Rücklaufanschluss (39) umfasst, wobei das Anbauantriebsmodul (10) eine mit dem mindestens einen Zulaufanschluss (38) verbindbare Zulaufleitung (40) und eine mit dem mindestens einen Rücklaufanschluss (39) verbindbare Rücklaufleitung (41) aufweist, und wobei die Zulaufleitung (40) und die Rücklaufleitung (41) über die Anbaumodulhydraulikpumpe (17) auf Seiten des Anbauantriebsmoduls (10) miteinander fluidleitend verbunden sind.

7. Baumaschine (1) gemäß einem der vorhergehenden Ansprüche,
**dadurch gekennzeichnet,**
**dass** der Hybridhydraulikkreislauf (37) derart ausgebildet ist, dass die erste Hydraulikpumpe (26) und der erste Hydraulikmotor (27) parallel zueinander geschaltet sind.

8. Baumaschine (1) gemäß einem der vorhergehenden Ansprüche,
**dadurch gekennzeichnet,**
**dass** der erste Hydraulikkreislauf (12) ergänzend zu dem ersten Hydraulikmotor (27) wenigstens einen weiteren Hydraulikmotor (33) aufweist, und dass der Hybridhydraulikkreislauf (37) derart ausgebildet ist, dass
- der erste Hydraulikmotor (27) und/oder
- der wenigstens eine weitere (33) Hydraulikmotor
und die erste Hydraulikpumpe (26) parallel zueinander geschaltet sind.

9. Baumaschine (1) gemäß einem der vorhergehenden Ansprüche,
**dadurch gekennzeichnet,**
**dass** die erste und/oder die zweite Hydraulikpumpe (26, 28) und/oder die Anbauhydraulikpumpe (17) als Verstellhydraulikpumpen und/oder als Pumpe-Motor-Einheit ausgebildet sind.

10. Baumaschine (1) gemäß einem der vorhergehenden Ansprüche,
**dadurch gekennzeichnet,**
**dass** eine Steuereinheit (9) von der Hauptmaschine (2) umfasst ist, die zur Steuerung der ersten (26) und/oder der zweiten (28) Hydraulikpumpe und/oder der Anbauhydraulikpumpe (17) ausgebildet ist, und dass das Anbauantriebsmodul (10) eine Modulsteuereinheit (22) aufweist, die über eine Signalübertragungsverbindung (24) mit der Steuereinheit (9) kommuniziert.

11. Baumaschine (1) gemäß einem der vorhergehenden Ansprüche,
**dadurch gekennzeichnet,**
**dass** zwischen der ersten Hydraulikpumpe (26) und/oder der zweiten Hydraulikpumpe (28) und dem Primärantriebsaggregat (6) eine Primärantriebskupplung (43) vorhanden ist, die in einem entkuppelten Zustand eine Drehmomentübertragung im Primärantriebsstrang (34) vom Primärantriebsaggregat (6) zur ersten Hydraulikpumpe (26) und/oder zur zweiten Hydraulikpumpe (28) trennt.

12. Verfahren (51) zum Umrüsten einer Baumaschine (1), insbesondere einer Baumaschine (1) gemäß einem der vorhergehenden Ansprüche, die Baumaschine (1) umfassend eine Hauptmaschine (2) mit einem Primärantriebsaggregat (6) und einem Hydrauliksystem (11) mit einem ersten Hydraulikkreislauf (12) mit einer erstem Hydraulikpumpe (26) und einem ersten Hydraulikmotor (27) und mit einem zweiten Hydraulikkreislauf (13) mit einer zweiten Hydraulikpumpe (28) und mit einem zweiten Hydraulikmotor (29), wobei die erste Hydraulikpumpe (26) und die zweite Hydraulikpumpe (28) miteinander über einer Kopplungseinrichtung (36) antriebsverbunden sind und zusammen über einen Primärantriebsstrang (34) vom Primärantriebsaggregat (6) antreibbar sind,
das Verfahren (51) umfassend die Schritte:
a) Aufnehmen (47) eines Anbauantriebsmoduls (10),
b) Herstellen (48) fluidleitender Verbindungen zwischen dem Anbauantriebsmodul (10) und der Hauptmaschine (2) derart, dass ein sich wenigstens teilweise durch eine Anbaumodulhydraulikpumpe (17) des Anbauantriebsmoduls (10) und den ersten Hydraulikfluidkreislauf (12) erstreckender und die erste Hydraulikpumpe (26) und/oder den ersten Hydraulikmotor (27) antreibender Hybridhydraulikkreislauf (37) erhalten wird;
c) Antreiben (49) der Anbaumodulhydraulikpumpe (17) durch ein vom Anbauantriebsmodul (10) umfasstes Sekundärantriebsaggregat (14) und dadurch Fördern von Hydraulikfluid im Hybridhydraulikkreislauf (37) zum Antreiben der ersten Hydraulikpumpe (26) und/oder des ersten Hydraulikmotors (27).

13. Verfahren (51) gemäß Anspruch 12,
**dadurch gekennzeichnet,**
**dass** im Schritt a) zunächst ein Verstellen der Aufnahmeeinrichtung (7) in eine Aufnahmeposition zur Aufnahme des Anbauantriebsmoduls (10) und anschließend in eine Betriebsposition zusammen mit dem Anbauantriebsmodul (10) erfolgt, wobei das Verstellen aus der Aufnahmeposition in die Betriebsposition insbesondere ein Heben und/oder Hochschwenken des Anbauantriebsmoduls (10) umfasst.

14. Verfahren (51) gemäß einem der Ansprüche 12 oder 13,
**dadurch gekennzeichnet,**
**dass** im Schritt c)
1. ein paralleles Antreiben innerhalb des Hybridhydraulikkreislaufes (37) durch von der Anbaumodulhydraulikpumpe (17) gefördertes Hydraulikfluid von wenigstens zwei der folgenden Einheiten erfolgt:
- der als Pumpe-Motor-Einheit ausgebildeten ersten Hydraulikpumpe (26),
- dem ersten Hydraulikmotor (27),
- wenigstens einem weiteren Hydraulikmotor (33) und/oder
2. mithilfe einer Kopplungseinrichtung (36) ein Antreiben wenigstens der zweiten Hydraulikpumpe (28) im zweiten Hydraulikkreislauf (13) durch eine Drehmomentübertragung über die Kopplungseinrichtung (36) zwischen der ersten Hydraulikpumpe (26) und der zweiten Hydraulikpumpe (28) erfolgt.

15. Verfahren (51) gemäß einem der Ansprüche 12 bis 14,
**dadurch gekennzeichnet,**
**dass** die Anbaumodulhydraulikpumpe (17) und/oder die, insbesondere als Pumpe-Motor-Einheit ausgebildete, erste Hydraulikpumpe (26) als Verstellhydraulikpumpe ausgebildet sind, und dass im Schritt c) ein Steuern eines oder mehrerer Betriebsparameter der Anbaumodulhydraulikpumpe (17) und/oder ersten Hydraulikpumpe (26) und/oder der zweiten Hydraulikpumpe (28) erfolgt.

16. Verfahren (51) gemäß einem der Ansprüche 12 bis 15,
**dadurch gekennzeichnet,**
**dass** des Sekundärantriebaggregat (14) einen Elektromotor (15) aufweist ist, und dass der Hybridhydraulikkreislauf (37) in einem Generatorbetriebszustand die als Motor-Pumpe-Einheit ausgebildete Anbauhydraulikpumpe (17) zum Laden des Energiespeichers (16) des Anbauantriebsmoduls (10) antreibt.

17. Verfahren (51) gemäß einem der Ansprüche 12 bis 16,
**dadurch gekennzeichnet,**
**dass** das Verfahren (51) zu einem Verfahren zum Nachrüsten einer Baumaschine (1), insbesondere einer Baumaschine (1) gemäß einem der Ansprüche 1 bis 17, weitergebildet ist, umfassend zunächst die Hauptmaschine (2) mit einem als von der Hauptmaschine (2) lösbar ausgebildeten Bodenbearbeitungsaggregat (3) und hiervon ausgehend dem Schritt a) vorgelagert ein Entfernen des Bodenbearbeitungsaggregates (3) und im Schritt a) das Aufnehmen und Lagern des Anbauantriebsmoduls (10) über Lagereinrichtungen der Aufnahmeeinrichtung (7), an denen vormals das Bodenbearbeitungsaggregat (3) gelagert war.

18. Verfahren (51) gemäß Anspruch 17,
**dadurch gekennzeichnet,**
**dass** zunächst ein Verstellen der Aufnahmeeinrichtung (7) aus der Betriebsposition in die Aufnahmeposition zum Absetzen des Bodenbearbeitungsaggregates (3) erfolgt.
